(19) Europäisches Patentamt
European Patent Office
Office européen des brevets

(11) EP 4 236 410 A1

(12) EUROPEAN PATENT APPLICATION
published in accordance with Art. 153(4) EPC

(43) Date of publication:
30.08.2023 Bulletin 2023/35

(21) Application number: 21884860.4

(22) Date of filing: 28.09.2021

(51) International Patent Classification (IPC):
H04W 12/08 (2021.01)    H04W 12/12 (2021.01)
H04L 9/40 (2022.01)

(52) Cooperative Patent Classification (CPC):
H04W 12/08; H04W 12/12

(86) International application number:
PCT/CN2021/121210

(87) International publication number:
WO 2022/089130 (05.05.2022 Gazette 2022/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.10.2020 CN 202011194022

(71) Applicant: Huawei Technologies Co., Ltd.
Shenzhen, Guangdong 518129 (CN)

(72) Inventors:
• ZHOU, Yan
  Shenzhen, Guangdong 518129 (CN)
• LIN, Qingchun
  Shenzhen, Guangdong 518129 (CN)
• ZHANG, Bo
  Shenzhen, Guangdong 518129 (CN)
• HE, Chengdong
  Shenzhen, Guangdong 518129 (CN)

(74) Representative: Huawei European IPR
Huawei Technologies Duesseldorf GmbH
Riesstraße 25
80992 München (DE)

(54) METHOD AND APPARATUS FOR CONTROLLING ABNORMAL TERMINAL

(57) This application provides a method and an apparatus for controlling an abnormal terminal, to effectively control an abnormal terminal. In this solution, a first network device receives data from a terminal device, and determines terminal abnormality information of the terminal device based on the data, where the terminal abnormality information includes at least one of a terminal identifier, a terminal abnormality status, and a terminal abnormality event. The first network device obtains, based on the terminal abnormality information, a first control action corresponding to the terminal device, and performs control and management on the terminal device based on the first control action. According to the method, the first network device can determine, based on the obtained terminal abnormality information, the first control action corresponding to the terminal device. When the terminal device has a network attack behavior, the first network device can perform control and management on the terminal device in a timely manner based on the first control action corresponding to the terminal device. This improves network security.

FIG. 2

## Description

## CROSS-REFERENCE TO RELATED APPLICATIONS

This application claims priority to Chinese Patent Application No. 202011194022.8, filed with the China National Intellectual Property Administration on October 30, 2020 and entitled "METHOD AND APPARATUS FOR CONTROLLING ABNORMAL TERMINAL", which is incorporated herein by reference in its entirety.

## TECHNICAL FIELD

This application relates to the field of communication technologies, and in particular, to a method and an apparatus for controlling an abnormal terminal.

## BACKGROUND

In a communication network, a terminal needs to first obtain an IP address before accessing an IP network via a core network for communication. An IP address of the terminal is usually assigned by a core network. After obtaining the IP address assigned by the core network, the terminal carries the IP address in service data sent by the terminal, and the core network performs processing such as session policy calculation based on the IP address.

When being hijacked or the like, the terminal may initiate various network attacks such as network scanning, distributed denial of service attack (distributed denial of service attack, DDoS), or virus spreading. The terminal initiating the network attacks often uses IP address spoofing to hide its identity or break through network defense during attacks. In use of IP address spoofing, the terminal initiating the network attacks forges a trusted IP address to break through network security measures, or uses an IP address of another terminal to hide the identity of the attacker. Consequently, it is difficult for a network device to accurately trace the source of the attacks.

In a conventional technology, to improve network security, a network firewall is usually set to allow only a terminal that meets an access control rule to access a network, to intercept an abnormal event that a terminal attacks the network. However, when a terminal forges an IP address allowed by the access control rule, the access control rule of the network firewall becomes invalid, and in this case, the terminal launches the attack.

An existing manner of controlling an abnormal terminal is undiversified and cannot effectively control an abnormal terminal.

## SUMMARY

This application provides a method and an apparatus for controlling an abnormal terminal, to effectively control an abnormal terminal.

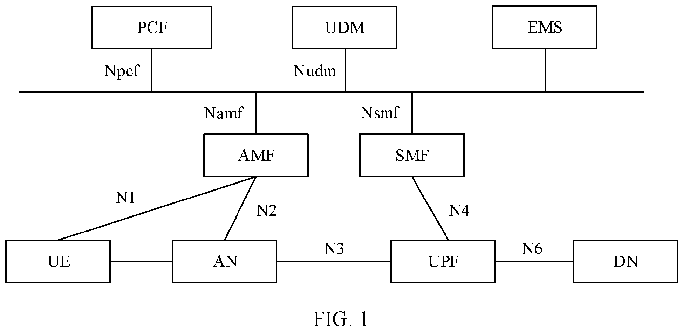

According to a first aspect, an embodiment of this application provides a method for controlling an abnormal terminal. The method is applicable to the communication system shown in FIG. 1. The method includes:

A first network device receives data from a terminal device, where the data includes user plane data and/or control plane data. The first network device determines terminal abnormality information of the terminal device based on the data, where the terminal abnormality information includes at least one of a terminal identifier, a terminal abnormality status, and a terminal abnormality event. The first network device obtains, based on the terminal abnormality information, a first control action corresponding to the terminal device, and performs control and management on the terminal device based on the first control action.

According to the method, the first network device can determine, based on the obtained terminal abnormality information, the first control action corresponding to the terminal device. In this way, when the terminal device has a network attack behavior, the first network device can perform control and management on the terminal device in a timely manner based on the first control action corresponding to the terminal device. This improves network security.

In a possible design, that the first network device obtains, based on the terminal abnormality information, a first control action corresponding to the terminal device includes: The first network device obtains, based on the terminal abnormality information, a control policy corresponding to the terminal device, where the control policy includes the first control action.

In a possible design, the control policy further includes some or all of the terminal identifier, the terminal abnormality status, and the terminal abnormality event.

According to the foregoing design, the first network device can obtain the control policy corresponding to the terminal device. The control policy includes the first control action, and may further include some or all of the terminal identifier, the terminal abnormality status, and the terminal abnormality event. Therefore, the first network device can obtain more terminal abnormality information, and therefore implement accurate control and management on the terminal device.

In a possible design, the terminal abnormality event is a control plane abnormality event, and the first control action is a control plane control action and/or a data plane control action; or the terminal abnormality event is a data plane abnormality event, and the first control action is a control plane control action and/or a data plane control action.

According to the design, during control and management on the terminal device, the first network device can perform control and management on the terminal device from a control plane, for example, forbid the terminal device from accessing a network; or perform control and management on the terminal device from a data plane, for example, discarding data sent by the terminal device. Certainly, control and management may alternatively be performed on the terminal device from both the control plane and the data plane.

In a possible design, that the first network device determines terminal abnormality information of the terminal device based on the data sent by the terminal device includes: The first network device obtains the terminal identifier of the terminal device based on the data; and/or, the first network device performs anomaly detection on the data, to determine the terminal abnormality event and/or the terminal abnormality status of the terminal device.

According to the design, the first network device can determine the terminal identifier based on the data sent by the terminal device, or perform anomaly detection on the data, to determine the terminal abnormality event and/or the terminal abnormality status of the terminal device. In this way, a plurality of pieces of terminal abnormality information are determined, and a plurality of manners of determining the first control action corresponding to the terminal device are provided. Therefore, the first network device can flexibly control the abnormal terminal device.

In a possible design, when the data is user plane data, the first network device determines context information associated with the user plane data, and determines the terminal identifier based on the context information.

In a possible design, when the data is control plane data, the first network device determines a permanent identifier of the terminal device based on the control plane data, and uses the permanent identifier of the terminal device as the terminal identifier of the terminal device, where the control plane data includes a temporary identifier or the permanent identifier of the terminal device.

In a possible design, when the terminal identifier in the control plane data is the temporary identifier, the first network device determines associated context information of the terminal device based on the temporary identifier of the terminal device, and determines the permanent identifier of the terminal device based on the context information of the terminal device.

According to the foregoing design, after receiving the data sent by the terminal device, the first network device can determine the terminal identifier based on the data, to determine, based on the terminal identifier, the first control action corresponding to the terminal device. In this embodiment of this application, different manners of determining the terminal identifier are provided for different data types (such as the control plane data or user plane data) sent by the terminal device, so that the first network device can accurately determine the terminal identifier based on the data sent by the terminal device.

In a possible design, the terminal abnormality information includes the terminal identifier, and the first network device is an access management function entity.

That the first network device obtains, based on the terminal abnormality information, a first control action corresponding to the terminal device includes: The first network device sends a subscription data request message that carries the terminal identifier to a second network device. The second network device is a data management function entity. The first network device obtains subscription data of the terminal device from the second network device, where the subscription data includes the first control action.

According to the design, when the first network device is an access management function entity and the second network device is a data management function entity, the data management function entity stores the subscription data of the terminal device, and the first network device obtains the subscription data of the terminal device from the second network device, so that the first control action corresponding to the terminal device included in the subscription data can be obtained without sending additional information. This further improves efficiency of controlling the abnormal terminal device.

In a possible design, the first control action is a control action that is determined by a fourth network device based on the terminal abnormality event of the terminal device reported by a third network device and that is delivered to the second network device.

According to the design, in this embodiment of this application, the third network device may further perform anomaly detection on the data sent by the terminal device, and report a determined terminal abnormality event to the fourth network device. Then, the fourth network device delivers a determined first control action to the second network device. In other words, this embodiment of this application is not limited to a manner of controlling an abnormal terminal in which the first network device interacts with the second network device. Control on an abnormal terminal may be implemented by interaction between a plurality of network devices.

In a possible design, the terminal abnormality information includes the terminal identifier, and the first network device is an access management function entity or a session management function entity. That the first network device obtains, based on the terminal abnormality information, a control policy corresponding to the terminal device includes: The first network device sends, to the second network device, a policy request message that carries the terminal identifier. The second network device is a policy control function entity. The first network device receives the first control action returned by the second network device.

According to the design, when the first network device is an access management function entity or a session management function entity, and the second network device is a policy control function entity, the first network device can send the policy request message to the second network device when determining that the terminal device needs to be controlled and managed, to obtain the first control action corresponding to the terminal device, so as to perform control and management on the terminal device.

In a possible design, the first control action is a control action determined by the second network device based on the terminal abnormality event of the terminal device that is reported by the third network device.

According to the design, in this embodiment of this application, the third network device may further perform anomaly detection on the terminal device, and report a determined terminal abnormality event to the second network device. In other words, this embodiment of this application is not limited to a manner of controlling an abnormal terminal in which the first network device interacts with the second network device. Control on an abnormal terminal may be implemented by interaction between a plurality of network devices.

In a possible design, the first network device is a user plane function entity, and that the first network device obtains, based on the terminal abnormality information, a first control action corresponding to the terminal device includes: The first network device searches, based on the terminal abnormality information, the first network device for the first control action corresponding to the terminal device.

In a possible design, that the first network device searches, based on the terminal abnormality information, the first network device for the first control action corresponding to the terminal device includes: The first network device receives a configuration command sent by a second network device. The configuration command includes a match condition and a corresponding control action. The match condition includes at least one of the terminal identifier, the terminal abnormality status, and the terminal abnormality event. The first network device determines, based on a correspondence between the match condition and the control action, a control action corresponding to the terminal abnormality information as the first control action.

According to the design, when the first network device is a user plane function entity, the second network device delivers the match condition and the corresponding control action to the first network device in advance. When the first network device needs to perform control and management on the terminal device, the first network device obtains, based on the terminal abnormality information, the control action corresponding to the terminal device, and performs control and management on the terminal device in a timely manner. This reduces a delay caused by message transmission, and improves efficiency of controlling an abnormal terminal.

In a possible design, before obtaining, based on the terminal abnormality information, the first control action corresponding to the terminal device, the first network device performs anomaly detection on the data, to determine the terminal abnormality event of the terminal device. The first network device reports the terminal abnormality event of the terminal device to the second network device.

According to the design, the first network device can perform anomaly detection on the data sent by the terminal device, determine the terminal abnormality event of the terminal device, and report the terminal abnormality event to the second network device, so that the second network device can record the terminal abnormality event of the terminal device, and can perform control and management on the terminal device when the terminal device accesses the network next time. This avoids repeated anomaly detection, and therefore saves network resources.

In a possible design, before obtaining, based on the terminal abnormality information, the first control action corresponding to the terminal device, the first network device performs anomaly detection on the data, to determine the terminal abnormality event of the terminal device. The first network device reports the terminal abnormality event of the terminal device to the second network device. The first network device receives, from the second network device, a second control action corresponding to the terminal abnormality event. The first network device performs control and management on the terminal device based on the second control action. The second control action may be the same as the first control action.

According to the design, the first network device performs anomaly detection on the data sent by the terminal device, and reports the terminal abnormality event to the second network device after determining the terminal abnormality event of the terminal device. The second network device determines the second control action corresponding to the terminal abnormality event, and delivers the second control action to the first network device, so that the terminal device having an abnormal attack behavior can be controlled and managed in a timely and accurate manner.

In a possible design, that the first network device reports the terminal abnormality event of the terminal device to the second network device includes:

The first network device reports the terminal abnormality event of the terminal device to the second network device by using an alarm message. Alternatively, the first network device reports the terminal abnormality event of the terminal device to the second network device by using a service log. Alternatively, the first network device reports the terminal abnormality event of the terminal device to the second network device through a message interface.

In a possible design, the first network device performs anomaly detection on the data in the following manners:

Manner 1: The first network device determines the terminal abnormality event of the terminal device based on data sent by the terminal device within preset duration and a reference value, where the reference value is determined by using a trained statistical analysis model based on historical data of the terminal device.

Manner 2: The first network device determines, by using a trained machine learning model, a terminal abnormality event corresponding to the data.

Manner 3: The first network device determines the terminal abnormality event of the terminal device based on a preset matching rule and the data.

According to the design, embodiments of this application provide a plurality of anomaly detection methods in which anomaly detection is performed on the terminal device in a manner such as machine learning, rule matching, and statistical analysis, to improve accuracy of anomaly detection. In addition, a plurality of types of terminal abnormality events can be detected, so that corresponding control actions can be determined for different types of terminal abnormality events. This implements targeted control and management on the terminal device, and further improves network security.

In a possible design, the first network device performs control and management on the terminal device within the preset duration based on the first control action.

According to the foregoing design, the first network device performs control and management on the terminal device based on the first control action within the preset duration. After the preset duration expires, the terminal device is considered as a normal terminal on which control and management is no longer performed. Then, a normal service of the terminal device is resumed in a scenario in which the hijacked terminal device no longer has a network attack behavior or the terminal device does not actively initiate a network attack.

According to a second aspect, an embodiment of this application provides a method for controlling an abnormal terminal. The method is applicable to the communication system shown in FIG. 1. The method includes:

A second network device receives a request message sent by a first network device. The request message includes terminal abnormality information of a terminal device, and the terminal abnormality information includes at least one of a terminal identifier, a terminal abnormality status, and a terminal abnormality event. The second network device determines a first control action corresponding to the terminal device, where the first control action corresponds to the terminal abnormality information, and delivers the first control action to the first network device.

According to the design, after receiving the request message sent by the first network device, the second network device determines, based on the terminal abnormality information, the first control action corresponding to the terminal device, so that the first control action corresponding to the abnormal terminal device can be determined in a targeted manner. The second network device delivers the first control action corresponding to the terminal device to the first network device, to assist the first network device in accurately performing control and management on the abnormal terminal.

In a possible design, that the second network device determines a first control action corresponding to the terminal device includes: The second network device determines a control policy corresponding to the terminal device, where the control policy includes the first control action. That the first control action is delivered to the first network device includes: The second network device delivers the control policy to the first network device.

In a possible design, the control policy further includes some or all of the terminal identifier, the terminal abnormality status, and the terminal abnormality event.

According to the foregoing design, the second network device may determine the control policy including the first control action, where the control policy may further include the terminal identifier, the terminal abnormality status, the terminal abnormality event, and the like, so that more terminal abnormality information can be recorded. This provides reference for performing control and management on the terminal device, and further improves accuracy of controlling an abnormal terminal.

In a possible design, the terminal abnormality event is a control plane abnormality event, and the first control action is a control plane control action and/or a data plane control action; or the terminal abnormality event is a data plane abnormality event, and the first control action is a control plane control action and/or a data plane control action.

In a possible design, the second network device is a data management function entity. That the second network device receives a request message sent by a first network device includes: The second network device receives a subscription data request message sent by the first network device. The subscription data request message includes the terminal identifier. The first network device is an access management function entity. That the first control action is delivered to the first network device includes: The second network device sends subscription data corresponding to the terminal identifier to the first network device, where the subscription data includes the first control action.

According to the design, when the first network device is an access management function entity, and the second network device is a data management function entity, the second network device sends the subscription data of the terminal device to the first network device, so that the first network device obtains, from the subscription data, the first control action corresponding to the terminal device, and performs control and management on the abnormal terminal in a timely manner.

In a possible design, the second network device is a policy control function entity. That the second network device receives a request message sent by a first network device includes: The second network device receives a policy request message that is sent by the first network device and that carries the terminal identifier. The first network device is an access management function entity or a session management function entity.

According to the design, when the first network device is an access management function entity or a session management function entity, and the second network device is a policy control function entity, the first network device may request, from the second network device by using the policy request message, the first control action corresponding to the terminal device. In this way, when the first network device needs to perform control and management on the terminal device, the first control action corresponding to the terminal device can be obtained in a timely manner.

In a possible design, the second network device is an element management function entity, and the first network device is a user plane function entity. That the first control action is delivered to the first network device includes: The second network device invokes a configuration command based on the first control action. The configuration command includes a match condition and a corresponding control action. The match condition includes at least one of the terminal identifier, the terminal abnormality status, and the terminal abnormality event. The second network device sends the configuration command to the first network device.

According to the design, when the first network device is a user plane function entity, the second network device delivers the match condition and the corresponding control action to the first network device by using the configuration command, so that when determining that the terminal performs access, the first network device searches, the first network device based on the match condition and the corresponding control action, for a control action corresponding to the terminal device. This reduces a delay caused by message transmission between network devices, and improves efficiency of controlling an abnormal terminal.

In a possible design, before the second network device receives the request message of the first network device, the method further includes: The second network device receives the terminal abnormality event of the terminal device reported by the first network device. The second network device determines, based on a preset correspondence between the terminal abnormality event and a control action, a second control action corresponding to the terminal abnormality event, and sends the second control action corresponding to the terminal abnormality event to the first network device.

According to the design, before the second network device receives the request message of the first network device, after receiving the terminal abnormality event reported by the first network device, the second network device determines the second control action corresponding to the terminal device, and sends the determined second control action to the first network device, to assist the first network device in performing control and management, in a timely manner, on the terminal device that has an abnormal behavior. This improves network security.

According to a third aspect, an embodiment of this application provides an apparatus for controlling an abnormal terminal, including units configured to perform the steps in the first aspect.

According to a fourth aspect, an embodiment of this application provides an apparatus for controlling an abnormal terminal, including units configured to perform the steps in the second aspect.

According to a fifth aspect, an embodiment of this application provides a function entity for controlling an abnormal terminal, including at least one processing element and at least one storage element. The at least one storage element is configured to store a program and data. The at least one processing element is configured to perform the method provided in the first aspect of this application.

According to a sixth aspect, an embodiment of this application provides a function entity for controlling an abnormal terminal, including at least one processing element and at least one storage element. The at least one storage element is configured to store a program and data. The at least one processing element is configured to perform the method provided in the second aspect of this application.

According to a seventh aspect, an embodiment of this application provides a communication system, including the apparatus for controlling an abnormal terminal provided in the third aspect and the apparatus for controlling an abnormal terminal provided in the fourth aspect.

According to an eighth aspect, an embodiment of this application further provides a computer program. When the computer program is run on a computer, the computer is enabled to perform the method provided in the first aspect or the second aspect.

According to a ninth aspect, an embodiment of this application further provides a computer-readable storage medium. The computer-readable storage medium stores a computer program. When the computer program is executed by a computer, the computer is enabled to perform the method provided in the first aspect or the second aspect.

According to a tenth aspect, an embodiment of this application further provides a chip. The chip is configured to read a computer program stored in a memory, to perform the method provided in the first aspect or the second aspect.

According to an eleventh aspect, an embodiment of this application further provides a chip system. The chip system includes a processor, configured to support a computer apparatus in implementing the method provided in the first aspect or the second aspect. In a possible design, the chip system further includes a memory. The memory is configured to store a program and data that are necessary for the computer apparatus. The chip system may include a chip, or may include a chip and another discrete component.

**BRIEF DESCRIPTION OF DRAWINGS**

FIG. 1 is a schematic diagram of an architecture of a communication system according to an embodiment of this application;

FIG. 2 is a flowchart of a method for controlling an abnormal terminal according to an embodiment of this application;

FIG. 3A and FIG. 3B are a flowchart of a first method for controlling an abnormal terminal in a 5G communication system according to an embodiment of this application;

FIG. 4 is a flowchart of a second method for controlling an abnormal terminal in a 5G communication system according to an embodiment of this application;

FIG. 5A and FIG. 5B are a flowchart of a third method for controlling an abnormal terminal in a 5G communication system according to an embodiment of this application;

FIG. 6A and FIG. 6B are a flowchart of a fourth method for controlling an abnormal terminal in a 5G communication system according to an embodiment of this application;

FIG. 7A and FIG. 7B are a flowchart of a fifth method for controlling an abnormal terminal in a 5G communication system according to an embodiment of this application;

FIG. 8A and FIG. 8B are a flowchart of a method for controlling an abnormal terminal using interaction of a security management function entity and a CN as an example according to an embodiment of this application;

FIG. 9 is a schematic diagram of a structure of a first apparatus for controlling an abnormal terminal according to an embodiment of this application;

FIG. 10 is a schematic diagram of a structure of a second apparatus for controlling an abnormal terminal according to an embodiment of this application;

FIG. 11 is a schematic diagram of a structure of a first function entity for controlling an abnormal terminal according to an embodiment of this application; and

FIG. 12 is a schematic diagram of a structure of a second function entity for controlling an abnormal terminal according to an embodiment of this application.

**DESCRIPTION OF EMBODIMENTS**

To facilitate understanding of embodiments of this application, the following describes terms related to embodiments of this application.

1. A security management function entity can perform control and management on an abnormal terminal based on a stored control action. The control action may be pre-configured by a person skilled in the art, or may be generated according to some specified policy generation methods. After receiving a terminal abnormality event reported by another function entity (for example, a function entity in a core network), the security management function entity can determine, based on the terminal abnormality event, a control action to be performed on the terminal, and deliver the control action to a core network device, to assist the core network device in performing control and management on the abnormal terminal. This effectively prevents a network attack behavior of the abnormal terminal.

Optionally, a representation form of the security management function entity is not limited in embodiments of this application. The security management function entity may be a network edge device or a server having a security management function, or may be a function entity (for example, an element management function entity or a policy control function entity) in the core network.

2. The Internet protocol (Internet Protocol, IP) is a network layer protocol in the TCP/IP system. The IP is designed to improve network scalability: First, Internet problems are resolved, implementing interconnection and interworking of large-scale and heterogeneous networks. Second, a coupling relationship between a top-layer network application and an underlying network technology is broken to facilitate independent development of both. According to an end-to-end design principle, IP provides only a connectionless, unreliable, and best-effort data packet transmission service for hosts.

IP is the core of the TCP/IP suite and the basis of the Internet. IP, which is located at the network layer of the TCP/IP model, can carry and transmit information of various protocols at the upper transport layer, such as TCP and UDP, and can place an IP packet in the link layer for transmission through various technologies such as Ethernet and a token-ring network.

IP specifies that every device on a network should have a unique IP address. As each terminal device on the IP network has a unique address, it is ensured that when a user operates on a terminal device, the user can efficiently and conveniently select a required object from millions of terminal devices.

3. Subscription information refers to user access information specified in a contract signed by a terminal device with an operator or another company that establishes a network. After subscribing to the network, the terminal device may access a corresponding network based on a network identifier in the subscription information, and use the network resource. The subscription information is stored on a core network side and a terminal device side. If the subscription information changes, the core network initiates a UE configuration update procedure (UE configuration update) to notify the terminal device side.

4. Integrity protection is to protect data integrity during data transmission, so that data received by a receive end is accurate data sent by a transmit end. This prevents data from being tampered with or having an IP address forged during transmission.

It should be noted that, with continuous development of technologies, the terms in embodiments of this application may change, but all of the terms shall within the protection scope of this application.

To make objectives, technical solutions, and advantages of embodiments of this application clearer, the following further describes embodiments of this application in detail with reference to the accompanying drawings.

FIG. 1 shows a possible architecture of a communication system to which a method for controlling an abnormal terminal provided in embodiments of this application is applicable. As shown in FIG. 1, the communication system includes three parts: a terminal device, a mobile communication network, and a data network (data network, DN). The following describes functions and entities of each part in detail with reference to the accompanying drawings.

A terminal device is a device that provides voice and/or data connectivity for a user. The terminal device may also be referred to as user equipment (user equipment, UE), a mobile station (mobile station, MS), a mobile terminal (mobile terminal, MT), or the like. For example, the terminal device may be a handheld device, a vehicle-mounted device, or another device that has a wireless connection function. Currently, for example, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), or a wireless terminal in a smart home (smart home).

An abnormal terminal is a terminal that has a network attack behavior after accessing a network, for example, a terminal that performs network scanning, DDoS, and virus spreading after accessing the network. After the abnormal terminal attacks the network, security problems such as network access failure and resource leakage may occur. Therefore, timely detection and control of the abnormal terminal can effectively maintain network security.

For ease of description, in subsequent descriptions and figures of this application, the terminal device may be referred to as a terminal for short.

The DN may also be referred to as a packet data network (packet data network, PDN), and is a network located outside the mobile communication network. A plurality of services may be deployed on the DN, including data and/or voice services or the like provided for the terminal device. The mobile communication network may access at least one DN, and a same DN may also be accessed by at least one mobile communication network. For example, the DN may be a packet data network (packet data network, PDN), for example, the Internet (Internet), an IP multimedia service (IP Multimedia Service, IMS) network, a data network dedicated to some applications (for example, a data network for Tencent Video), the Ethernet, or an IP local network. This is not limited in this application.

The mobile communication network provides an access service and an end-to-end connection service for the terminal device. The terminal device may access the DN via the mobile communication network, to implement a specific service. The mobile communication network may further include two parts: an access network (access network, AN) and a core network (core network, CN). The AN is mainly responsible for a wireless access function of the terminal device. The CN is used to connect the terminal device to the DN.

An AN device provides a wireless access service for the terminal. The AN device is a node in the AN, and may also be referred to as a base station, or may be referred to as a radio access network (radio access network, RAN) node (or device). Currently, for example, the access network device may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP).

The CN may be further divided into a control plane (control plane, CP) and a user plane (user plane, UP) based on specific logical functions. Entities responsible for a control plane function in the core network may be collectively referred to as a control plane function entity, and entities responsible for a user plane function may be collectively referred to as a user plane function entity. Each function entity in the core network may also be referred to as a network element, and may be a network element implemented on dedicated hardware, or may be a software instance running on dedicated hardware, or may be an instance of a virtualization function on a proper platform.

The following separately describes functions of main function entities in the core network in detail.

The user plane function entity is mainly responsible for forwarding and receiving user plane data of a terminal. The user plane function entity may receive user plane data from the DN, and transmit the user plane data to UE via the AN device. The user plane function entity may further receive user plane data from the UE via the AN device, and forward the user plane data to the DN. A resource transmission and scheduling function in the user plane function entity used to provide a service for the UE is managed and controlled by the control plane function entity.

Control plane function entities include: a policy control function (policy control function, PCF) entity, a unified data management (unified data management, UDM) entity, an access and mobility management function (access and mobility management function, AMF) entity, a session management function (session management function, SMF) entity, and an element management system (network element management system, EMS) entity.

For ease of description, the UPF entity, the AMF entity, the PCF entity, the UDM entity, and the SMF entity are referred to as a UPF, an AMF, a PCF, a UDM, and an SMF for short below.

The AMF may be connected to the UE through an N1 interface, the AMF may be connected to the AN device through an N2 interface, the AN device may be connected to the UPF through an N3 interface, the SMF may be connected to the UPF through an N4 interface, and the UPF may be connected to the DN through an N6 interface. An interface name is merely an example for description. This is not specifically limited in embodiments of this application. It should be understood that embodiments of this application are not limited to the communication system shown in FIG. 1. Names of the network elements shown in FIG. 1 are merely used as examples for description herein, and are not intended to limit functional entities included in the architecture of the communication system to which the method of this application is applicable. The following describes in detail functions of the functional entities or devices in the CN.

The AMF may be configured to manage access control and mobility of the UE. In actual application, the AMF includes a mobility management function in a mobility management entity (mobility management entity, MME) in a network framework in Long Term Evolution (long term evolution, LTE), and further includes an access management function. The AMF may be specifically responsible for registration, mobility management, a tracking area update procedure, reachability detection, selection of a session management function network element, mobility state transition management, and the like for the UE. In the communication system shown in FIG. 1, the AMF may provide an Namf service.

The SMF may be responsible for session management (including session establishment, modification, and release), UPF selection and reselection, allocation of a UE Internet Protocol (internet protocol, IP) address, quality of service (quality of service, QoS) control, and the like for the terminal. In the communication system shown in FIG. 1, the SMF may provide an Nsmf service.

The PCF may be responsible for policy control and decision-making, and provide functions such as detection on a service data flow and an application, gating, QoS, and flow-based charging control, and the like. In the communication system shown in FIG. 1, the PCF may provide an Npcf service.

The UDM may be configured to manage subscription data of the UE, registration information related to the terminal, and the like. In the communication system shown in FIG. 1, the UDM may provide an Nudm service.

The EMS may be used to manage one or more telecommunication network units of a specific type, provide a unified operation and maintenance function in a professional network field, and can manage and maintain the device and network in an end-to-end manner.

It should be noted that the communication system shown in FIG. 1 does not constitute a limitation on a communication system to which embodiments of this application are applicable. The communication system architecture shown in FIG. 1 is a 5G system architecture. Optionally, the method in embodiments of this application is further applicable to a 2G communication system, a 3G communication system, a 4G communication system, and various future communication systems such as a 6G communication system or another communication system. It should be understood that names of all function entities in this application are merely used as examples, and may have other names in future communication, or in future communication, the network elements in this application may be replaced with other entities or devices that have same functions. This is not limited in this application. Unified descriptions are provided herein, and details are not described below again. For example, in the 4G communication system, a network element having a function of the AMF may also be referred to as an MME, and network elements having functions of the SMF and UPF may correspondingly be an SGW and a PGW.

The terminal performs service communication in the communication system shown in FIG. 1. For example, when the terminal accesses an IP network for communication via the CN, the CN assigns a unique IP address to the terminal. After obtaining the IP address assigned by the CN, the terminal adds the IP address to service data that is sent. Then, the CN performs processing such as session policy calculation based on the IP address.

However, when being hijacked, the terminal may initiate a network attack such as network scanning, DDoS, or virus spreading. To hide the identity or break through network protection during an attack, the terminal initiating a network attack usually uses IP address spoofing to forge a trusted IP address to access the network to initiate the network attack. For example, the terminal forges its IP address as another source IP address, and sends a data packet including the fake source IP address. When a service server sends a corresponding data packet to the terminal, the server cannot determine whether the source IP address is a fake source IP address, and directly uses the fake source IP address as a destination address. Consequently, the service server is vulnerable to an attack from the abnormal terminal.

To improve network security, a common method is to set a network firewall to allow only a terminal that meets an access control rule to access the network, so as to intercept an abnormal terminal. However, if a terminal disguises its IP address as an IP address that meets the access control rule, the network firewall cannot learn an IP address assigned by the CN to the terminal and thus cannot identify whether the terminal uses IP address spoofing. This causes invalidity of the access control rule of the firewall.

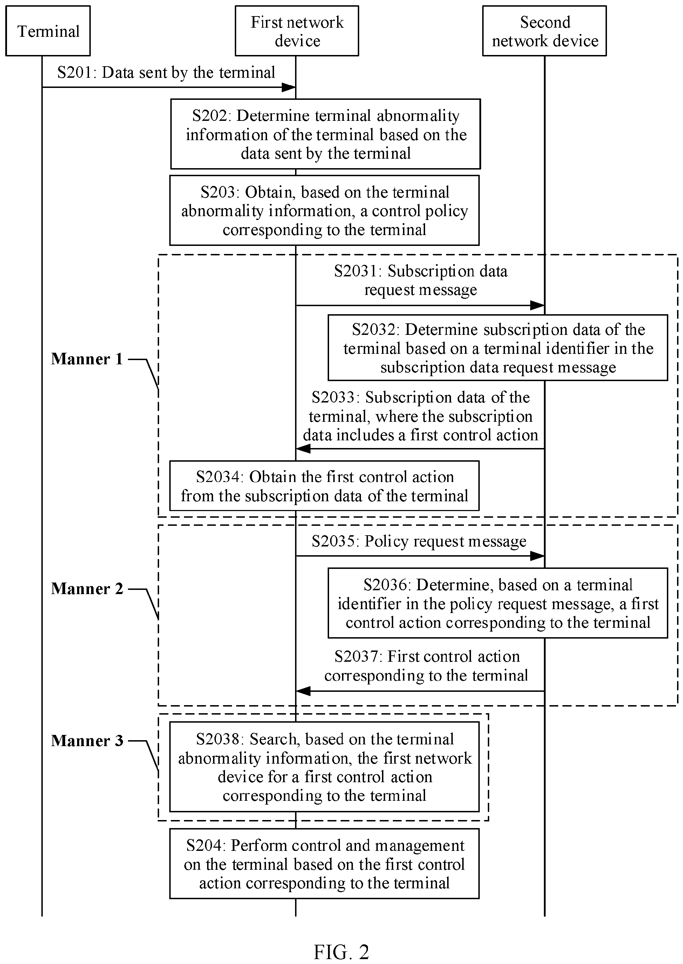

To resolve the foregoing problem, an embodiment of this application provides a method for controlling an abnormal terminal to detect an abnormal terminal and perform control and management on the abnormal terminal, so as to improve network security. The method may be applied to the communication system shown in FIG. 1. The following describes steps of the method in detail with reference to a flowchart shown in FIG. 2. A first network device in this embodiment may be an AMF, an SMF, or a UPF in the communication system, and a second network device may be a UDM, an EMS, or a PCF in the communication system.

S201: The first network device receives data from a terminal.

In specific implementation, after determining that the terminal accesses a CN, the first network device obtains the data sent by the terminal. The data sent by the terminal includes user plane data and/or control plane data.

S202: The first network device determines terminal abnormality information of the terminal based on the data.

Optionally, the terminal abnormality information includes at least one of a terminal identifier, a terminal abnormality status, and a terminal abnormality event. The terminal abnormality status is used to indicate whether the terminal is an abnormal terminal. A terminal having an abnormal behavior such as a network attack behavior is an abnormal terminal. The terminal abnormality event is determined after anomaly detection is performed on the data sent by the terminal.

In an optional implementation, for different cases in which the terminal sends user plane data and control plane data, the first network device obtains the terminal identifier in the following manners:

(1) In a scenario in which the data sent by the terminal is user plane data, after receiving the user plane data, the first network device determines a terminal identifier corresponding to the user plane data.

In specific implementation, the first network device determines, based on a tunnel identifier of the user plane data, context information associated with the user plane data, and obtains the terminal identifier from the context information of the terminal. The context information of the terminal is generated by the terminal when the terminal accesses the CN from a control plane.

(2) In a scenario in which the data sent by the terminal is control plane data, the first network device determines a permanent identifier of the terminal based on the control plane data sent by the terminal. The control plane data sent by the terminal includes a temporary identifier or the permanent identifier of the terminal. If the control plane data includes the temporary identifier of the terminal, the first network device determines associated context information of the terminal based on the temporary identifier of the terminal, and obtains the permanent identifier of the terminal from the context information of the terminal.

The first network device uses the determined permanent identifier of the terminal as the terminal identifier.

It should be noted that the terminal identifier may alternatively be a fixed identifier such as an international mobile subscriber identity (International Mobile Subscriber Identity, IMSI) or a subscription permanent identifier (Subscription Permanent Identifier, SUPI) of the terminal, a mobile station international ISDN number (Mobile Station International ISDN Number, MSISDN) or a generic public subscription identifier (Generic Public Subscription Identifier, GPSI), an international mobile equipment identity (International Mobile Equipment Identity, IMEI) or a permanent equipment identifier (Permanent Equipment Identifier, PEI). Alternatively, the terminal identifier may be a temporary identifier such as a globally unique temporary identifier (Globally Unique Temporary Identifier, GUTI), a temporary mobile station identity (Temporary Mobile Subscriber Identity, TMSI), or a tunnel endpoint identifier (Tunnel Endpoint Identifier, TEID).

Optionally, the terminal abnormality event includes a control plane abnormality event and a data plane abnormality event. The control plane abnormality event is that, for example, a quantity of control plane messages sent by the terminal within preset duration is greater than a preset threshold, the terminal impersonates another terminal when accessing the core network, or a location of the terminal is abnormal. The data plane abnormality event is that, for example, the terminal sends an IP address spoofing packet, a quantity of data packets sent by the terminal within preset duration is greater than a preset threshold, the terminal sends or receives virus traffic, or the terminal has a Trojan horse behavior. The following describes an anomaly detection manner provided in this embodiment of this application:

Manner 1: The terminal abnormality event corresponding to the terminal is determined based on the data sent by the terminal within preset duration and a reference value corresponding to a type of the data.

The first network device pre-configures a reference value corresponding to a data type. The reference value is determined by using a trained statistical analysis model based on historical data of the terminal.

Further, the historical data of the terminal and the data type are input into the trained statistical analysis model, to obtain a reference value corresponding to the data type output by the trained statistical analysis model. After the reference value corresponding to the data type is obtained, an absolute value of a difference between an amount of data sent by the terminal within the preset duration and the reference value is determined. When it is determined that the absolute value of the difference is greater than a preset threshold, it is determined that the terminal abnormality event is data abnormality.

In specific implementation, when the following formula is met, it is determined that the terminal abnormality event is data abnormality:

$$|D - R| > b$$

where D is the amount of data sent by the terminal within the preset duration, R is a reference value corresponding to a data type of the data sent by the terminal within the preset duration, and b is the preset threshold.

For example, historical uplink traffic data of the terminal is input into the trained statistical analysis model, to obtain a reference value corresponding to the historical uplink traffic data of the terminal. Uplink traffic data of the terminal within the preset duration is obtained, to determine an absolute value of a difference between the uplink traffic data and a reference value corresponding to the uplink traffic data. When the absolute value of the difference is greater than the preset threshold, it is determined that the terminal abnormality event is uplink traffic data abnormality.

In this implementation, the reference value corresponding to the data type is determined by using the statistical analysis model based on the historical data of the terminal. The reference value can represent a behavior habit of the terminal in a historical service. After the absolute value of the difference between the amount of data sent by the terminal within the preset time and the reference value is calculated, if the absolute value of the difference is less than the preset threshold, it is determined that the amount of data sent by the terminal within the preset time is within a normal fluctuation range. If the absolute value of the difference is not less than the preset threshold, it is determined that the amount of data sent by the terminal within the preset time is excessively large or small, that is, data abnormality occurs.

Manner 2: The terminal abnormality event corresponding to the data sent by the terminal is determined based on a trained machine learning model.

The first network device uses the data sent by the terminal as an input of the trained machine learning model, detects the data sent by the terminal, and obtains an abnormal event output by the trained machine learning model, for example, virus spreading, network scanning, or abnormal packet transmission.

In an optional implementation, the machine learning model is trained in the following manner:
The machine learning model is trained using abnormal traffic data in a training dataset as an input of the machine learning model and an abnormal event corresponding to the abnormal traffic data as an output of the machine learning model. A loss value between a predicted abnormal event output by the machine learning model and the abnormal event corresponding to the abnormal traffic data is calculated based on a loss function. Then, parameters for the machine learning model are adjusted based on the loss value. The steps are repeated until the loss value is converged within a preset range. In this case, it is determined that training of the machine learning model is completed.

Manner 3: The terminal abnormality event of the terminal is determined based on a preset matching rule and the data sent by the terminal.

The first network device prestores an abnormality event matching rule, and determines the corresponding terminal abnormality event based on the data sent by the terminal.

For example, the first network device obtains an uplink data packet of the terminal, and determines an IP address of the uplink data packet. The first network device determines, based on the terminal identifier, an IP address assigned by the core network to the terminal, and when determining that the IP address of the uplink data packet is inconsistent with the IP address assigned by the core network to the terminal, determines that the terminal abnormality event is sending an IP address spoofing packet.

S203: The first network device obtains, based on the terminal abnormality information, a first control action corresponding to the terminal.

The first control action is an action used to perform control and management on the terminal. The control action includes a control plane control action and a data plane control action. For example, the control plane control action may be prohibiting access of the terminal, and the data plane control action may be discarding data sent by the terminal.

In a first implementation, the terminal abnormality information includes the terminal identifier, and the first network device may determine, according to manner 1 (as shown in steps S2031 to S2034 in FIG. 2), the first control action corresponding to the terminal. A specific process is as follows:

S2031: The first network device sends a subscription data request message to the second network device. The subscription data request message includes the terminal identifier.
S2032: The second network device determines subscription data of the terminal based on the terminal identifier in the subscription data request message.
S2033: The second network device sends the subscription data of the terminal to the first network device, where the subscription data includes the first control action.

S2034: The first network device obtains the first control action from the subscription data of the terminal.

It should be noted that the first control action in the subscription data of the terminal may be preset in the subscription data, or may be updated to the subscription data by a third network device by invoking a configuration command.

In a second implementation, the terminal abnormality information includes the terminal identifier, and the first network device may further determine, according to manner 2 (as shown in steps S2035 to S2037 in FIG. 2), the first control action corresponding to the terminal. A specific process is as follows:

S2035: The first network device sends a policy request message to the second network device.
The policy request message carries the terminal identifier.
S2036: The second network device determines, based on the terminal identifier in the policy request message, the first control action corresponding to the terminal.
S2037: The second network device sends the first control action corresponding to the terminal to the first network device.

In a third implementation, the first network device may alternatively determine, according to manner 3 (for example, step S2038 in FIG. 2), the first control action corresponding to the terminal. A specific process is as follows:
S2038: The first network device searches, based on the terminal abnormality information, the first network device for the first control action corresponding to the terminal.

In specific implementation, the first network device determines, based on a correspondence between a match condition and a control action, a control action corresponding to the terminal abnormality information as the first control action. The correspondence between the match condition and the control action may be preconfigured in the first network device, or may be configured in the first network device by the second network device by invoking a configuration command. Optionally, the match condition includes at least one of the terminal identifier, the terminal abnormality status, and the terminal abnormality event.

For example, it is assumed that the terminal abnormality information includes the terminal identifier, the terminal abnormality status, and the terminal abnormality event, and the match condition includes a terminal identifier, a terminal abnormality status, and a terminal abnormality event. In this case, matching may be performed on the terminal identifier and the match condition first to determine a corresponding control action, and the determined control action is used as the first control action. If a plurality of control actions are determined, matching may be performed on the match condition, and the terminal abnormality status and the terminal abnormality event, to filter the plurality of control actions and determine the first control action corresponding to the terminal.

It should be noted that, if the terminal abnormality information includes the terminal identifier, the first control action corresponding to the terminal may be determined preferentially based on the terminal identifier. For specific implementation, refer to the foregoing manner 1 to manner 3. Because the method for controlling an abnormal terminal provided in this embodiment of this application can record an abnormal event of the terminal, when the terminal accesses the network again, anomaly detection may not be performed on data sent by the terminal, and the terminal is directly controlled and managed. Compared with a solution in which anomaly detection is performed on data sent by the terminal each time, in this method, a control action corresponds to a terminal identifier of an abnormal terminal having an abnormal event. Therefore, when the abnormal terminal accesses the network, a corresponding control action may be determined based on the terminal identifier, and control and management are performed on the abnormal terminal based on the control action. This improves network security and improves efficiency of controlling the abnormal terminal.

In an optional implementation, the second network device may determine, in the following manners, the first control action corresponding to the terminal:

Manner 1: The second network device receives the terminal abnormality event reported by the first network device or the third network device, determines, based on a preset correspondence between the terminal abnormality event and a control action, a control action corresponding to the terminal abnormality event as the first control action corresponding to the terminal.
Manner 2: The second network device receives the first control action that is corresponding to the terminal and that is delivered by a fourth network device. The fourth network device may determine a corresponding control action based on the terminal abnormality event reported by the first network device or the third network device.

During implementation, the first network device or the third network device performs anomaly detection on the terminal based on the data received from the terminal, determines a terminal abnormality event of the terminal, and reports the terminal abnormality event to the second network device or the fourth network device. For a specific anomaly detection method, refer to the foregoing descriptions of anomaly detection manners. Details are not described herein again.

Optionally, after determining the terminal abnormality event of the terminal, the first network device or the third network device may report the terminal abnormality event to the second network device or the fourth network device in the following manners:

Manner 1: The terminal abnormality event is reported through an alarm message.
Manner 2: The terminal abnormality event is reported through a service log.
Manner 3: The terminal abnormality event is reported through a message interface.

It should be noted that a message reported by the first network device or the third network device to the second network device or the fourth network device may be an original plaintext message, or may be encrypted to protect user privacy. This is not limited in this embodiment of this application.

In an implementation, after determining that the data sent by the terminal is integrity-protected data, the first network device or the third network device performs anomaly detection on the data sent by the terminal. When the terminal sends a data packet, if integrity protection is not performed on the sent data in a transmission process, the data packet sent by the terminal may be tampered with by a third party in the transmission process. Consequently, control and management are performed on a terminal that does not actively initiate a network attack, affecting a normal service of the normal terminal. Therefore, before anomaly detection is performed on the data sent by the terminal, it may be determined that the data is integrity-protected data. This improves accuracy of anomaly detection. Specifically, after receiving the data sent by the terminal, the first network device or the third network device determines the context information of the terminal, and when determining that the context information of the terminal includes an integrity protection identifier, determines that the data sent by the terminal is integrity-protected data.

In this embodiment of this application, that the first network device obtains the first control action corresponding to the terminal may alternatively be that, the first network device obtains a control policy corresponding to the terminal. The control policy corresponding to the terminal includes the first control action, and may further include some or all of the terminal identifier, the terminal abnormality status, and the terminal abnormality event. In addition, the control policy may further include assistance indications for implementation of the control policy, such as policy validity duration, an effective time point, and an effective time period.

S204: The first network device performs control and management on the terminal based on the first control action corresponding to the terminal.

In specific implementation, the first network device may perform control and management on the terminal within preset duration. In a scenario in which the terminal is no longer hijacked or the terminal does not actively initiate a network attack, after controlling the terminal for a period of time, the first network device restores the terminal as a normal terminal, to avoid affecting a normal service of the normal terminal.

Further, a timer may be set during control and management on the terminal. Within a time period set in the timer, the terminal is controlled and managed. After the timer expires, the terminal is considered as a normal terminal, and a normal service of the terminal is resumed.

In addition, an embodiment of this application further provides a method for controlling an abnormal terminal. After receiving data sent by a terminal, a first network device obtains a terminal identifier, and determines, based on the terminal identifier, that a first control action corresponding to the terminal cannot be determined. This indicates that the terminal is not identified as an abnormal terminal. In this case, anomaly detection is performed on the data sent by the terminal, to determine a terminal abnormality event of the terminal. The first network device reports the terminal abnormality event of the terminal to a second network device. The second network device determines a second control action corresponding to the terminal abnormality event, and sends the second control action to the first network device, so that the first network device performs control and management on the terminal based on the second control action. Further, after sending the second control action to the first network device, the second network device may store the second control action as the first control action corresponding to the terminal in preset storage space. In other words, the first control action may be the same as the second control action.

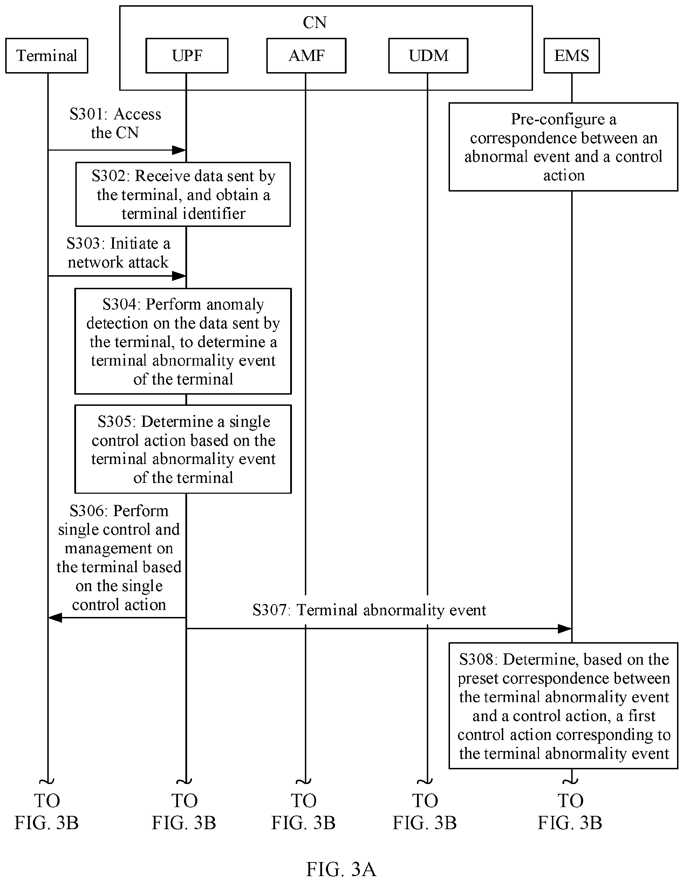

Based on the foregoing embodiments, this application further provides some instances of controlling an abnormal terminal. These instances are also applied to the communication system shown in FIG. 1. The following describes the instances in detail with reference to FIG. 3A to FIG. 6B.

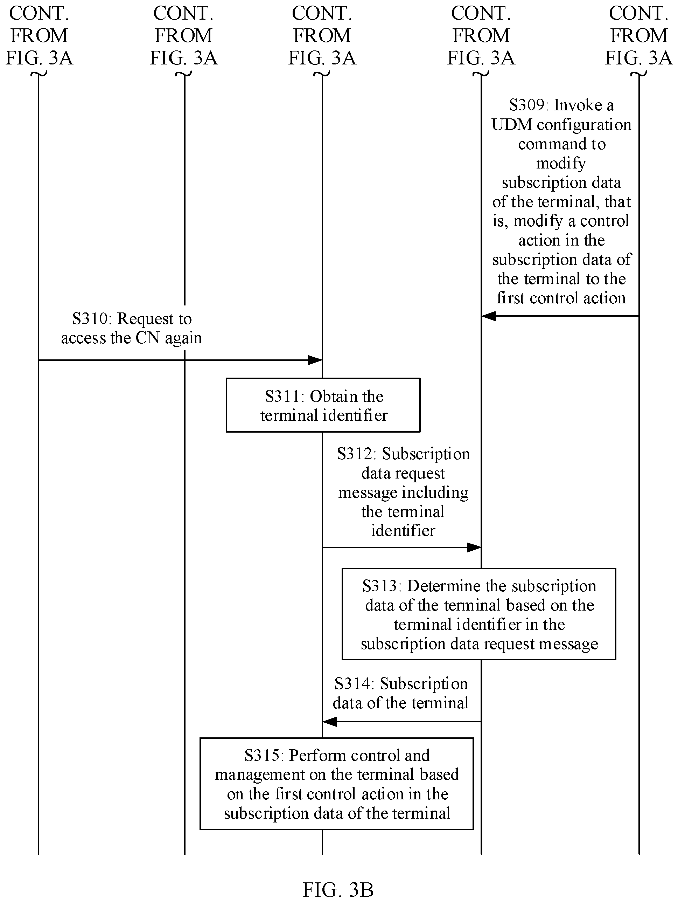

Instance 1: An example in which a first network device is an AMF and a second network device is a UDM is used for description in this instance. As shown in FIG. 3A and FIG. 3B, the instance specifically includes the following steps:

S301: A terminal accesses a CN.
S302: A UPF receives data from the terminal, and obtains a terminal identifier.
S303: The terminal initiates a network attack.
S304: The UPF performs anomaly detection on the data sent by the terminal, to determine a terminal abnormality event of the terminal.
S305: The UPF determines a single control action based on the terminal abnormality event.
S306: The UPF performs single control and management on the terminal based on the single control action.

It should be noted that when the UPF performs anomaly detection on the terminal and determines that the terminal is an abnormal terminal, the UPF may determine, based on a prestored correspondence between a single control policy and the terminal abnormality event, a single control action corresponding to the terminal abnormality event of the terminal. Then, the UPF immediately performs single control and management on the terminal based on the determined single control action. This reduces security issues caused by a network attack behavior of the terminal.

S307: The UPF reports the terminal abnormality event to an EMS.

In specific implementation, the UPF may report the terminal abnormality event to the EMS through an alarm message, a service log, a message interface, or the like.

Optionally, the UPF may alternatively notify the terminal abnormality event to an SMF, and the SMF reports the terminal abnormality event to the EMS.

S308: The EMS determines, based on a preset correspondence between the terminal abnormality event and a control action, a first control action corresponding to the terminal abnormality event.

S309: The EMS invokes a UDM configuration command to modify subscription data of the terminal, that is, modify a control action in the subscription data of the terminal to the first control action.

S310: The terminal requests to access the CN again.

S311: The AMF obtains the terminal identifier.

S312: The AMF sends a subscription data request message including the terminal identifier to the UDM.

S313: The UDM determines the subscription data of the terminal based on the terminal identifier in the subscription data request message.

S314: The UDM sends the subscription data of the terminal to the AMF.

S315: The AMF performs control and management on the terminal based on the first control action in the subscription data of the terminal.

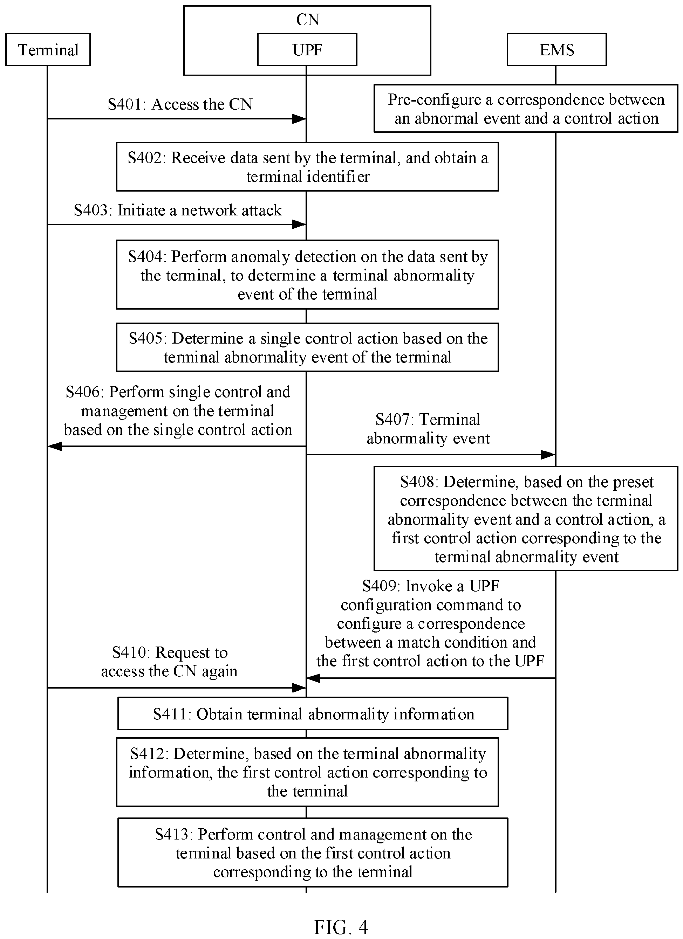

Instance 2: An example in which a first network device is a UPF and a second network device is an EMS is used for description in this instance. As shown in FIG. 4, the instance specifically includes the following steps:

S401: A terminal accesses a CN.
S402: The UPF receives data from the terminal, and obtains a terminal identifier.
S403: The terminal initiates a network attack.
S404: The UPF performs anomaly detection on the data sent by the terminal, to determine a terminal abnormality event of the terminal.
S405: The UPF determines a single control action based on the terminal abnormality event.
S406: The UPF performs single control and management on the terminal based on the single control action.

S407: The UPF reports the terminal abnormality event to the EMS.

In specific implementation, the UPF may report the terminal abnormality event to the EMS through an alarm message, a service log, a message interface, or the like.

Optionally, the UPF may alternatively notify the terminal abnormality event to an SMF, and the SMF reports the terminal abnormality event to the EMS.

S408: The EMS determines, based on a preset correspondence between the terminal abnormality event and a control action, a first control action corresponding to the terminal abnormality event.

S409: The EMS invokes a UPF configuration command to configure a match condition and a corresponding control action in the UPF.

In an optional implementation, the EMS may alternatively invoke an SMF configuration command to configure the match condition and corresponding control action to the SMF, and the SMF delivers the match condition and corresponding control action to the UPF.

S410: The terminal requests to access the CN again.

S411: The UPF obtains terminal abnormality information.

S412: The UPF searches, based on the terminal abnormality information, the UPF for the first control action corresponding to the terminal.

S413: The UPF performs control and management on the terminal based on the first control action corresponding to the terminal.

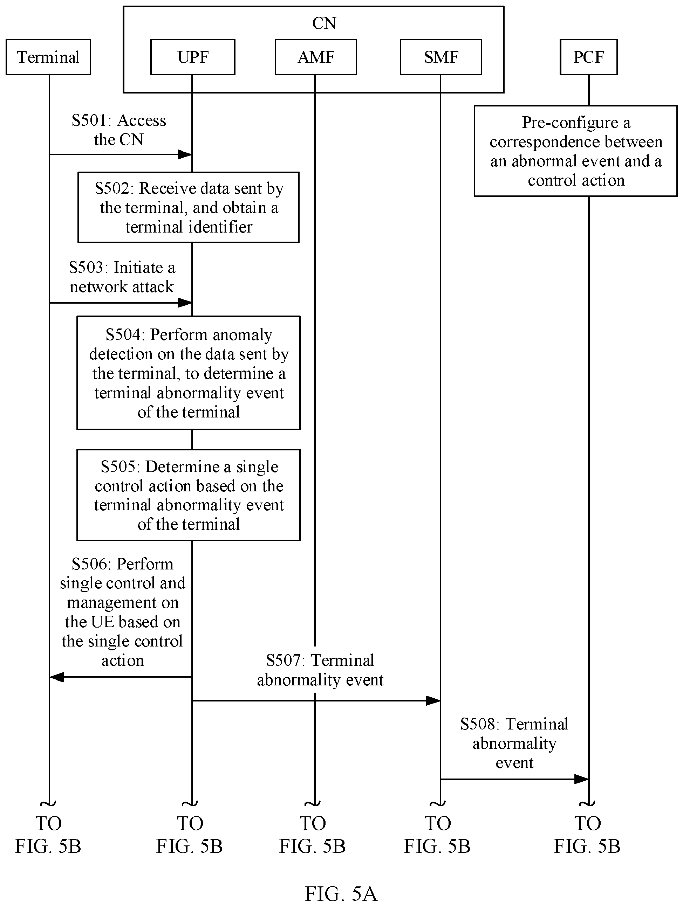

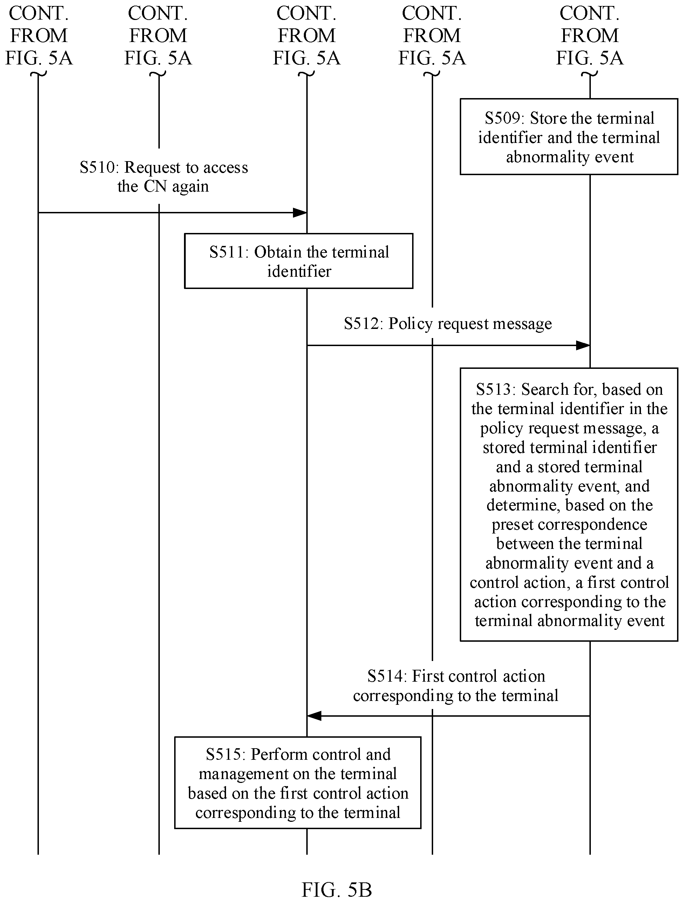

Instance 3: An example in which a first network device is an AMF and a second network device is a PCF is used for description in this instance. As shown in FIG. 5A and FIG. 5B, the instance specifically includes the following steps:

S501: A terminal accesses a CN.
S502: A UPF receives data from the terminal, and obtains a terminal identifier.
S503: The terminal initiates a network attack.
S504: The UPF performs anomaly detection on the data sent by the terminal, to determine a terminal abnormality event of the terminal.
S505: The UPF determines a single control action based on the terminal abnormality event.
S506: The UPF performs single control and management on the terminal based on the single control action.
S507: The UPF sends the terminal abnormality event to an SMF.
S508: The SMF reports the terminal abnormality event to the PCF.

Optionally, the UPF may directly report the terminal abnormality event to the PCF through a message interface or the like.

S509: The PCF stores the terminal identifier and the terminal abnormality event.

S510: The terminal requests to access the CN again.

S511: The AMF obtains the terminal identifier.

S512: The AMF sends a policy request message to the PCF.

S513: The PCF searches for, based on the terminal identifier in the policy request message, a stored terminal identifier and a stored terminal abnormality event, and determines, based on a preset correspondence between the terminal abnormality event and a control action, a first control action corresponding to the terminal abnormality event.

S514: The PCF sends the first control action to the AMF.

S515: The AMF performs control and management on the terminal based on the first control action.

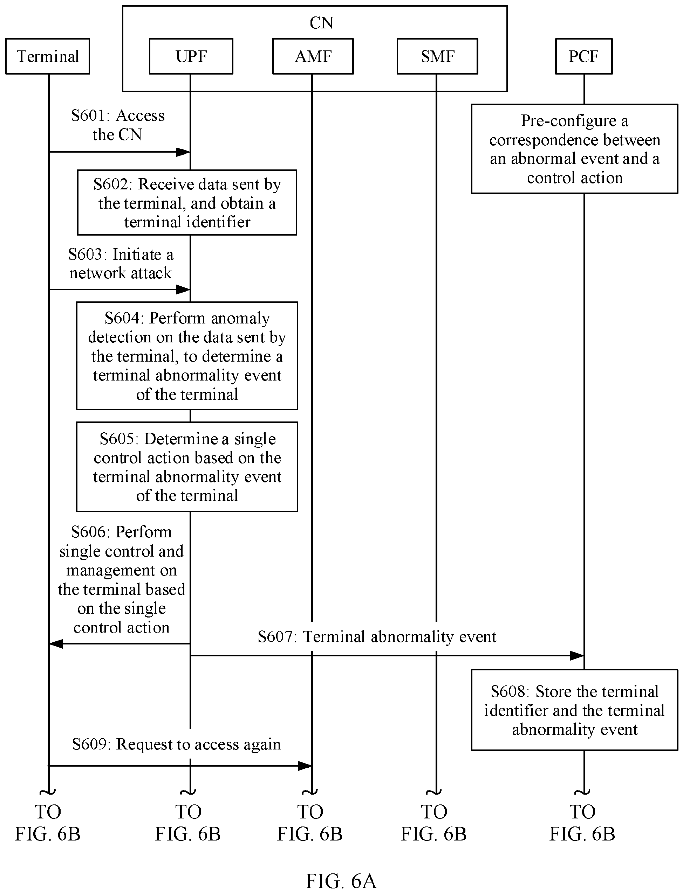

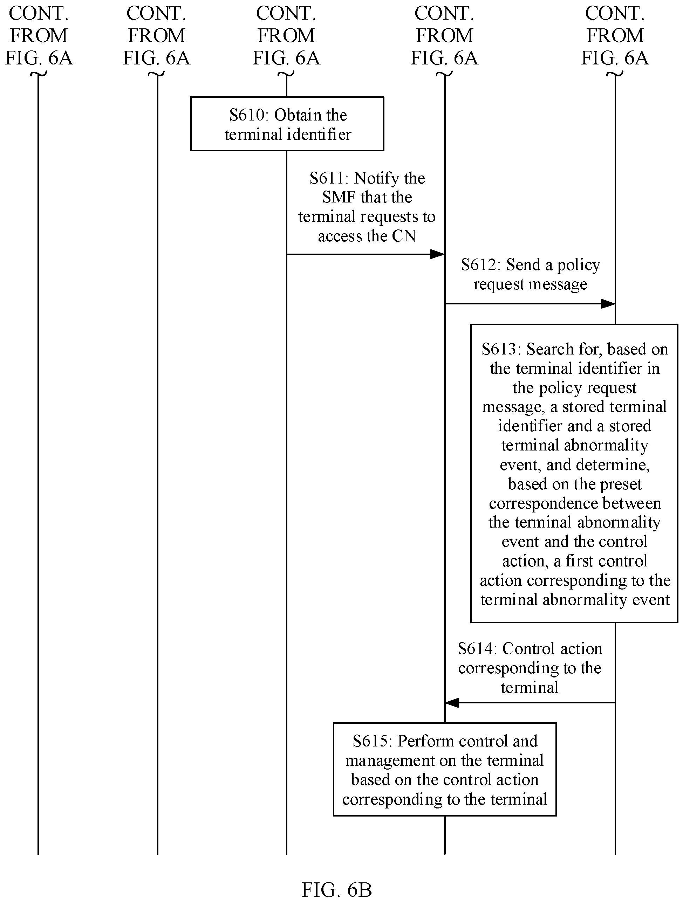

Instance 4: An example in which a first network device is an SMF and a second network device is a PCF is used for description in this instance. As shown in FIG. 6A and FIG. 6B, the instance specifically includes the following steps:

S601: A terminal accesses a CN.

S602: An AMF receives data from the terminal, and obtains a terminal identifier.

S603: The terminal initiates a network attack.

S604: The AMF performs anomaly detection on the data sent by the terminal, to determine a terminal abnormality event of the terminal.

S605: The AMF determines a single control action based on the terminal abnormality event.

S606: The AMF performs single control and management on the terminal based on the single control action.

S607: The AMF reports the terminal abnormality event to the PCF.

In specific implementation, the AMF may report the terminal abnormality event to the PCF through a message interface or the like.

S608: The PCF stores the terminal identifier and the terminal abnormality event.

S609: The terminal requests to access the CN again.

S610: The AMF obtains the terminal identifier.

S611: The AMF notifies the SMF that the terminal requests to access the CN.

S612: The SMF sends a policy request message to the PCF.

S613: The PCF searches for, based on the terminal identifier in the policy request message, a stored terminal identifier and a stored terminal abnormality event, and determines, based on a preset correspondence between the terminal abnormality event and a control action, a first control action corresponding to the terminal abnormality event.

S614: The PCF sends the first control action to the SMF.

S615: The SMF sends the first control action to the UPF.

Optionally, the PCF may directly deliver the first control action to the UPF, without forwarding by the SMF.

S616: The UPF performs control and management on the terminal based on the first control action.

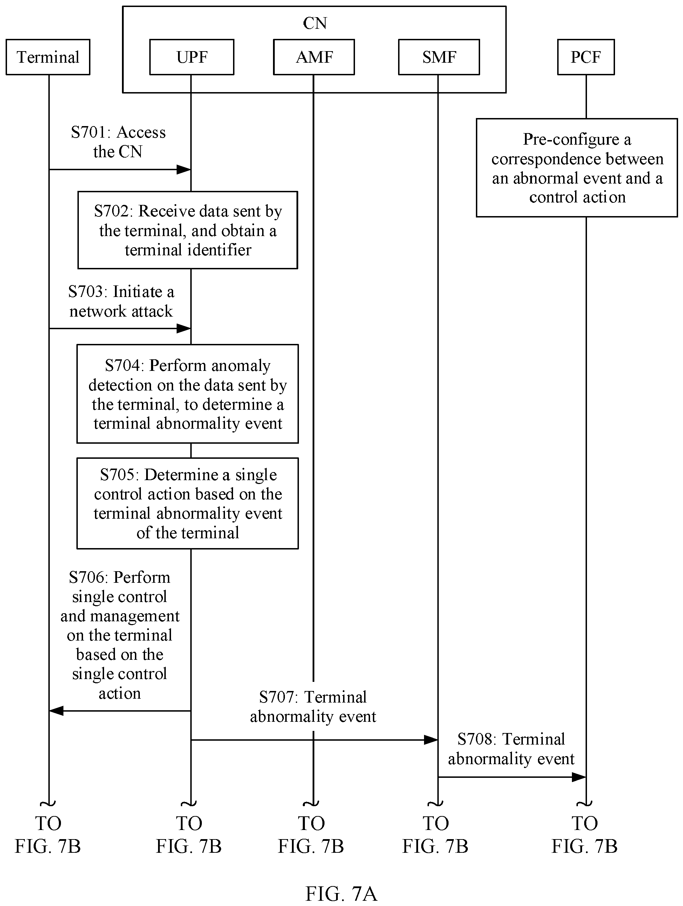

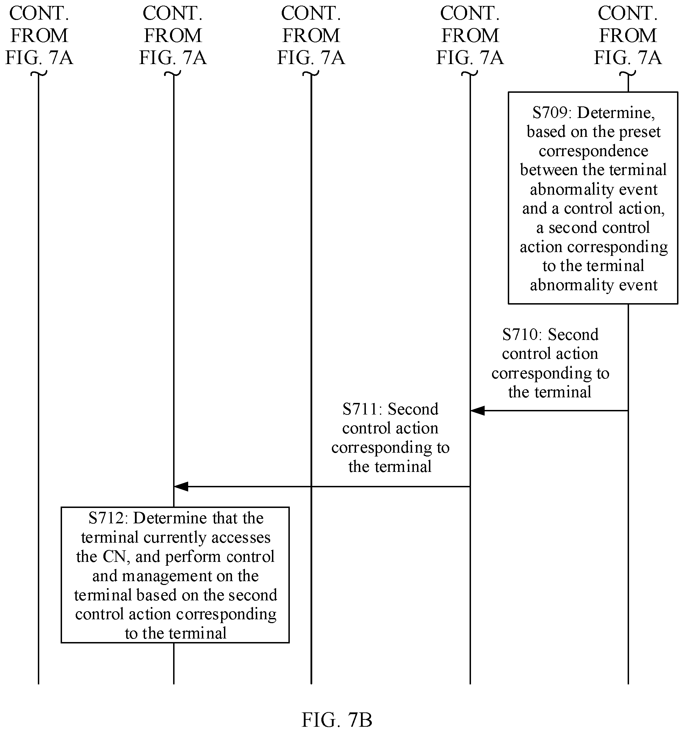

Instance 5: An example in which a first network device is a UPF and a second network device is a PCF is used for description in this instance. As shown in FIG. 7A and FIG. 7B, the instance specifically includes the following steps:

S701: A terminal accesses a CN.

S702: The UPF receives data from the terminal, and obtains a terminal identifier.

S703: The terminal initiates a network attack.

S704: The UPF performs anomaly detection on the data sent by the terminal, to determine a terminal abnormality event of the terminal.

S705: The UPF determines a single control action based on the terminal abnormality event.

S706: The UPF performs single control and management on the terminal based on the single control action.

S707: The UPF sends the terminal abnormality event to an SMF.

S708: The SMF reports the terminal abnormality event to the PCF.

Optionally, the UPF may directly report the terminal abnormality event to the PCF.

S709: The PCF determines, based on a preset correspondence between the terminal abnormality event and a control action, a second control action corresponding to the terminal abnormality event.

S710: The PCF sends the second control action to the SMF.

S711: The SMF sends the second control action to the UPF.

Optionally, the PCF may directly deliver the second control action to the UPF, without forwarding by the SMF.

S712: The UPF determines that the terminal currently accesses the CN, and performs control and management on the terminal based on the second control action corresponding to the terminal.

It should be noted that the foregoing instances 1 to 5 describe methods for controlling an abnormal terminal using an example in which a communication system is a 5G system. In specific implementation, the method for controlling an abnormal terminal provided in this application is also applicable to a 2G system, a 3G system, or a 4G system. For example, a function performed by the UPF in the core network of the 5G system in this embodiment of this application may be implemented by a GGSN in the 2G system and the 3G system or a PGW in the 4G system. A function performed by the AMF in the core network of the 5G system in this embodiment of this application may be implemented by an SGSN in the 2G system and the 3G system or an MME in the 4G system. For a specific implementation process, refer to the foregoing embodiment. Details are not described herein again.

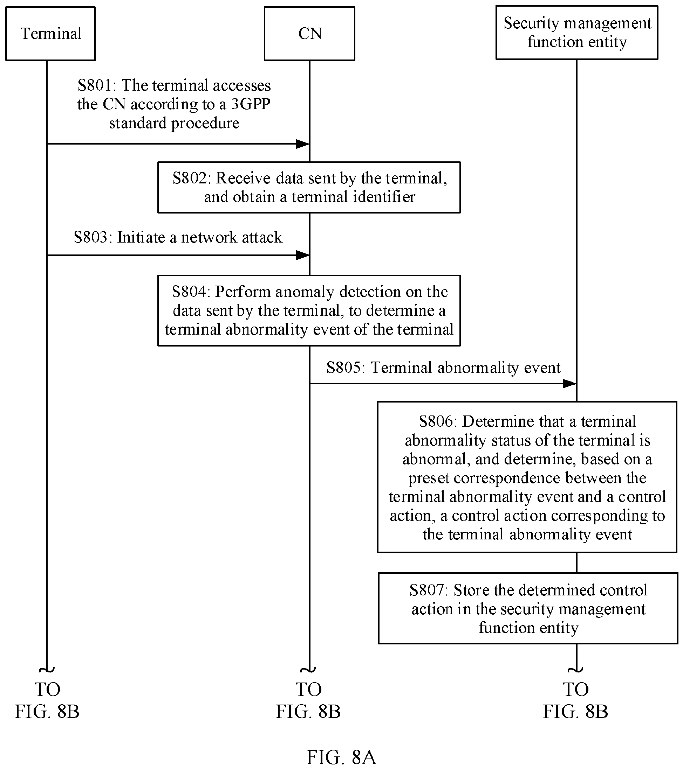

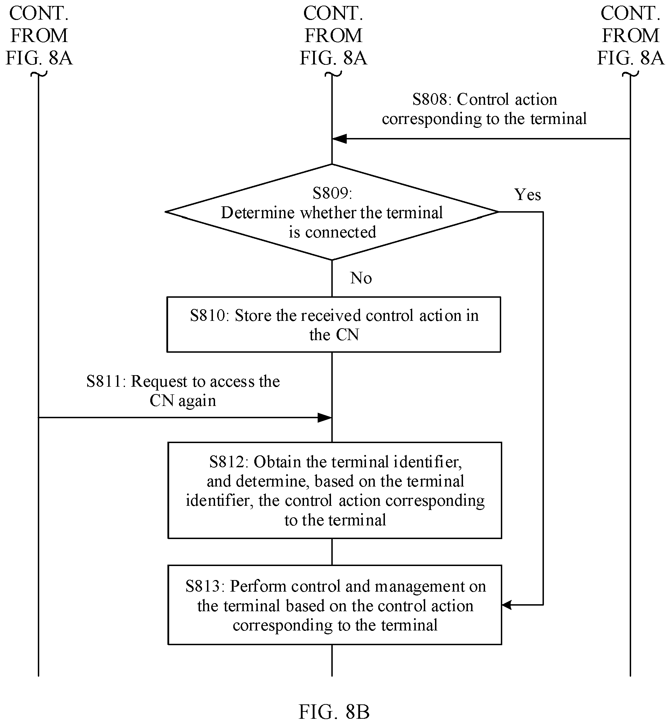

Based on the foregoing embodiments and instances, this application further provides a method for controlling an abnormal terminal. The method may be applied to the communication system shown in FIG. 1, and can implement the method provided in the foregoing embodiment or instance. A security management function entity in this method is configured to perform control and management on an abnormal terminal. In specific implementation, the security management function entity may be an independent device having a security management function, or may be a function entity in a CN, for example, an EMS or a PCF. The security management function entity implements control and management on the abnormal terminal through interaction with the CN. The following describes the method with reference to a method flowchart shown in FIG. 8A and FIG. 8B.

S801: A terminal accesses the core network according to a 3GPP standard procedure.

S802: The CN receives data from the terminal, and obtains a terminal identifier.

S803: The terminal initiates a network attack.

Specifically, the network attack initiated by the terminal may be sending an IP address spoofing packet, network scanning, DDoS, virus spreading, or the like. When the terminal sends the IP address spoofing packet, the terminal forges another IP address and does not use an IP address assigned by the core network device to the terminal.

S804: The CN performs anomaly detection on the data sent by the terminal, to determine a terminal abnormality event of the terminal.

In specific implementation, for a manner in which the CN performs anomaly detection on the terminal, refer to the anomaly detection method in the foregoing embodiment. Details are not described again.

S805: The CN reports the terminal abnormality event to the security management function entity.

S806: The security management function entity determines that the terminal abnormality status of the terminal is abnormal, and determines, based on a preset correspondence between the terminal abnormality event and a control action, a control action corresponding to the terminal abnormality event.

S807: The security management function entity stores the determined control action in the security management function entity.

S808: The security management function entity delivers the determined control action to the CN.

In an optional implementation, after receiving a policy request message sent by the CN, the security management function entity may further deliver, to the CN, a control policy corresponding to the terminal identifier in the policy request message.

S809: The CN determines whether the terminal is connected. If yes, S813 is performed. If not, S810 is performed.

S810: The CN stores the received control action in the CN.

S811: The terminal requests to access the CN again.

S812: The CN obtains the terminal identifier, and determines, based on the terminal identifier, the control action corresponding to the terminal.

S813: The CN performs control and management on the terminal based on the control action corresponding to the terminal.

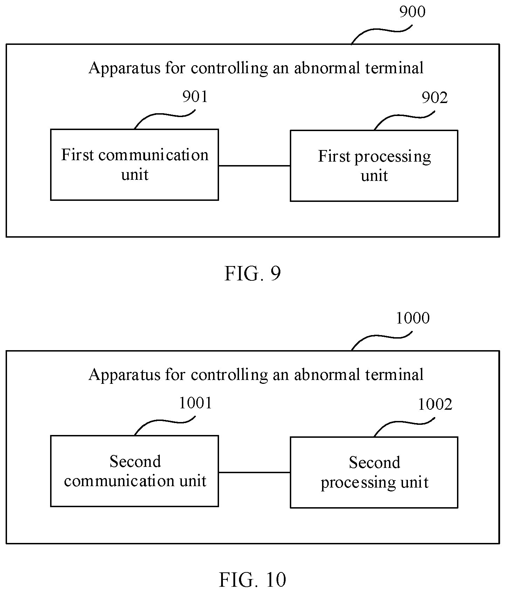

Based on a same technical concept, this application further provides an apparatus 900 for controlling an abnormal terminal. A structure of the apparatus is shown in FIG. 9, including a first communication unit 901 and a first processing unit 902. The apparatus 900 for controlling an abnormal terminal may be used on the first network device shown in FIG. 2 to FIG. 7B, and may implement the method for controlling an abnormal terminal provided in the foregoing embodiment. The following describes functions of the units of the apparatus 900 for controlling an abnormal terminal.

The first communication unit 901 is configured to receive data from a terminal device, where the data includes user plane data and/or control plane data.

The first processing unit 902 is configured to: determine terminal abnormality information of the terminal device based on the data, where the terminal abnormality information includes at least one of a terminal identifier, a terminal abnormality status, and a terminal abnormality event; and obtain, based on the terminal abnormality information, a first control action corresponding to the terminal device, and perform control and management on the terminal device based on the first control action.

In an implementation, the first processing unit 902 is specifically configured to: obtain the terminal identifier of the terminal device based on the data; and/or perform anomaly detection on the data, to determine the terminal abnormality event and/or the terminal abnormality status of the terminal device.

In an implementation, the terminal abnormality information includes the terminal identifier, the first network device is an access management function entity, and the first processing unit 902 is specifically configured to: send, via the first communication unit 901, a subscription data request message that carries the terminal identifier to a second network device, where the second network device is a data management function entity; and obtain subscription data of the terminal device from the second network device via the first communication unit 901, where the subscription data includes the first control action.

In an implementation, the terminal abnormality information includes the terminal identifier, the first network device is an access management function entity or a session management function entity, and the first processing unit 902 is specifically configured to: send, via the first communication unit 901, a policy request message that carries the terminal identifier to the second network device, where the second network device is a policy control function entity; and receive, via the first communication unit 901, the first control action returned by the second network device.

In an implementation, the first network device is a user plane function entity, and the first processing unit 902 is specifically configured to: search, based on the terminal abnormality information, the first network device for the first control action corresponding to the terminal device.

In an implementation, the first processing unit 902 is specifically configured to: receive, via the first communication unit 901, a configuration command sent by a second network device, where the configuration command includes a match condition and a corresponding control action, and the match condition includes at least one of the terminal identifier, the terminal abnormality status, and the terminal abnormality event; and determine, based on a correspondence between the match condition and the control action, a control action corresponding to the terminal abnormality information as the first control action.

In an implementation, the first processing unit 902 is further configured to: before obtaining, based on the terminal abnormality information, the first control action corresponding to the terminal device, perform anomaly detection on the data, to determine the terminal abnormality event of the terminal device, and report the terminal abnormality event of the terminal device to the second network device via the first communication unit 901.

In an implementation, the first processing unit 902 is further configured to: before obtaining, based on the terminal abnormality information, the first control action corresponding to the terminal device, perform anomaly detection on the data, to determine the terminal abnormality event of the terminal device, report the terminal abnormality event of the terminal device to the second network device via the first communication unit, and receive a second control action corresponding to the terminal abnormality event from the second network device via the first communication unit; and perform control and management on the terminal device based on the second control action.

In an implementation, the first processing unit 902 is specifically configured to: determine the terminal abnormality event of the terminal device based on data sent by the terminal device within preset duration and a reference value, where the reference value is determined by using a trained statistical analysis model based on historical data of the terminal device; or determine, by using a trained machine learning model, a terminal abnormality event corresponding to the data; or determine the terminal abnormality event of the terminal device based on a preset matching rule and the data.

In an implementation, the first processing unit 902 is specifically configured to perform control and management on the terminal device within the preset duration based on the first control action.

Based on a same technical concept, this application further provides an apparatus 1000 for controlling an abnormal terminal. A structure of the apparatus is shown in FIG. 10, including a second communication unit 1001 and a second processing unit 1002. The apparatus 1000 for controlling an abnormal terminal may be used on the second network device shown in FIG. 2 to FIG. 7B, and may implement the method for controlling an abnormal terminal provided in the foregoing embodiment. The following describes functions of the units of the apparatus 1000 for controlling an abnormal terminal.

The second communication unit 1001 is configured to: receive a request message sent by a first network device, where the request message includes terminal abnormality information of a terminal, and the terminal abnormality information includes at least one of a terminal identifier, a terminal abnormality status, and a terminal abnormality event; and after the second processing unit 1002 determines a first control action, deliver the first control action to the first network device.

The second processing unit 1002 is configured to determine the first control action corresponding to the terminal device, where the first control action corresponds to the terminal abnormality information.

In an implementation, the second network device is a data management function entity, and the second communication unit 1001 is specifically configured to: receive a subscription data request message sent by the first network device, where the subscription data request message includes the terminal identifier, and the first network device is an access management function entity; and send subscription data corresponding to the terminal identifier to the first network device, where the subscription data includes the first control action.

In an implementation, the second network device is a policy control function entity, and the second communication unit 1001 is specifically configured to: receive a policy request message that is sent by the first network device and that carries the terminal identifier, where the first network device is an access management function entity or a session management function entity.

In an implementation, the second network device is an element management function entity, and the first network device is a user plane function entity. The second processing unit 1002 is specifically configured to: invoke a configuration command based on the first control action, where the configuration command includes a match condition and a corresponding control action, and the match condition includes at least one of the terminal identifier, the terminal abnormality status, and the terminal abnormality event; and send the configuration command to the first network device via the second communication unit 1001.

In an implementation, the second processing unit 1002 is further configured to: before receiving the request message of the first network device, receive, via the second communication unit 1001, the terminal abnormality event of the terminal device reported by the first network device; determine, based on a preset correspondence between the terminal abnormality event and a control action, a second control action corresponding to the terminal abnormality event; and send the second control action to the first network device via the second communication unit 1001.

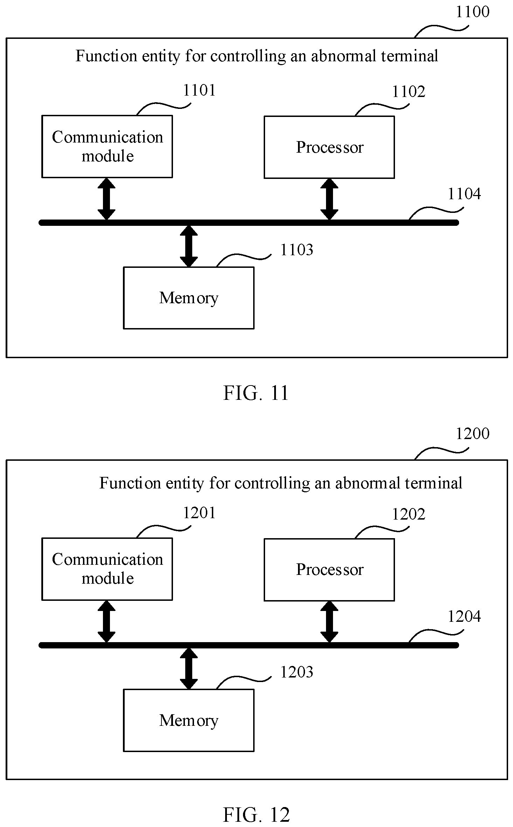

Based on a same technical concept, this application further provides a function entity 1100 for controlling an abnormal terminal. A structure of the function entity is shown in FIG. 11. The function entity 1100 for controlling an abnormal terminal may be used on the first network device shown in FIG. 2 to FIG. 7B, and may implement the method for controlling an abnormal terminal provided in the foregoing embodiment. Referring to FIG. 11, the function entity 1100 for controlling an abnormal terminal includes a communication module 1101, a processor 1102, and a memory 1103. The communication module 1101, the processor 1102, and the memory 1103 are connected to each other.

Optionally, the communication module 1101, the processor 1102, and the memory 1103 are connected to each other through a bus 1104. The bus 1104 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 11, but this does not mean that there is only one bus or only one type of bus.

The communication module 1101 is configured to receive and send data, to implement communication and interaction with another device. For example, when the function entity 1100 for controlling an abnormal terminal is used on the first network device shown in FIG. 2, the communication module 1101 may be implemented through a physical interface, a communication module, a communication interface, or an input/output interface.

The processor 1102 is configured to receive data from a terminal device via the communication module 1101, where the data includes user plane data and/or control plane data; determine terminal abnormality information of the terminal device based on the data, where the terminal abnormality information includes at least one of a terminal identifier, a terminal abnormality status, and a terminal abnormality event; and obtain, based on the terminal abnormality information, a first control action corresponding to the terminal device, and perform control and management on the terminal device based on the first control action.

In an implementation, the processor 1102 is specifically configured to: obtain the terminal identifier of the terminal device based on the data; and/or perform anomaly detection on the data, to determine the terminal abnormality event and/or the terminal abnormality status of the terminal device.

In an implementation, the terminal abnormality information includes the terminal identifier, the first network device is an access management function entity, and the processor 1102 is specifically configured to: send, via the communication module 1101, a subscription data request message that carries the terminal identifier to a second network device, where the second network device is a data management function entity; and obtain subscription data of the terminal from the second network device via the communication module 1101, where the subscription data includes the first control action.

In an implementation, the terminal abnormality information includes the terminal identifier, the first network device is an access management function entity or a session management function entity, and the processor 1102 is specifically configured to: send, via the communication module 1101, a policy request message that carries the terminal identifier to the second network device, where the second network device is a policy control function entity; and receive, via the communication module 1101, the first control action returned by the second network device.

In an implementation, the first network device is a user plane function entity, and the processor 1102 is specifically configured to: search, based on the terminal abnormality information, the first network device for the first control action corresponding to the terminal device.

In an implementation, the processor 1102 is specifically configured to: receive, via the communication module 1101, a configuration command sent by a second network device, where the configuration command includes a match condition and a corresponding control action, and the match condition includes at least one of the terminal identifier, the terminal abnormality status, and the terminal abnormality event; and determine, based on a correspondence between the match condition and the control action, a control action corresponding to the terminal abnormality information as the first control action.

In an implementation, the processor 1102 is further configured to: before obtaining, based on the terminal abnormality information, the first control action corresponding to the terminal device, perform anomaly detection on the data, to determine the terminal abnormality event of the terminal device; and report the terminal abnormality event of the terminal device to the second network device via the communication module 1101.

In an implementation, the processor 1102 is further configured to: before obtaining, based on the terminal abnormality information, the first control action corresponding to the terminal device, perform anomaly detection on the data, to determine the terminal abnormality event of the terminal device, report the terminal abnormality event of the terminal device to the second network device via the communication module 1101, and receive a second control action corresponding to the terminal abnormality event from the second network device via the communication module 1101; and perform control and management on the terminal device based on the second control action.

In an implementation, the processor 1102 is specifically configured to: determine the terminal abnormality event of the terminal device based on data sent by the terminal device within preset duration and a reference value, where the reference value is determined by using a trained statistical analysis model based on historical data of the terminal device; or determine, by using a trained machine learning model, a terminal abnormality event corresponding to the data; or determine the terminal abnormality event of the terminal device based on a preset matching rule and the data.

In an implementation, the processor 1102 is specifically configured to perform control and management on the terminal device within the preset duration based on the first control action.

The memory 1103 is configured to store program instructions, data, and the like. Specifically, the program instructions may include program code. The program code includes computer operation instructions. The memory 1103 may include a random access memory (random access memory, RAM), or may further include a non-volatile memory (non-volatile memory), for example, at least one disk memory. The processor 1102 executes the program instructions stored in the memory 1103, and implements the foregoing functions by using the data stored in the memory 1103, to implement the method for controlling an abnormal terminal provided in the foregoing embodiment.

It may be understood that the memory 1103 in FIG. 11 of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that, the memory in the system and method described in this specification includes but is not limited to these memories and any other proper type of memory.

Based on a same technical concept, this application further provides a function entity 1200 for controlling an abnormal terminal. A structure of the function entity is shown in FIG. 12. The function entity 1200 for controlling an abnormal terminal may be used on the second network device shown in FIG. 2 to FIG. 7B, and may implement the method for controlling an abnormal terminal provided in the foregoing embodiment. Referring to FIG. 12, the function entity 1200 for controlling an abnormal terminal includes a communication module 1201, a processor 1202, and a memory 1203. The communication module 1201, the processor 1202, and the memory 1203 are connected to each other.

Optionally, the communication module 1201, the processor 1202, and the memory 1203 are connected to each other through a bus 1204. The bus 1204 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 12, but this does not mean that there is only one bus or only one type of bus.

The communication module 1201 is configured to receive and send data, to implement communication and interaction with another device. For example, when the function entity 1200 for controlling an abnormal terminal is used on the second network device shown in FIG. 2, the communication module 1201 may be implemented through a physical interface, a communication module, a communication interface, or an input/output interface.

The processor 1202 is configured to: receive, via the communication module 1201, a request message sent by a first network device, where the request message includes terminal abnormality information of a terminal device, and the terminal abnormality information includes at least one of a terminal identifier, a terminal abnormality status, and a terminal abnormality event; determine a first control action corresponding to the terminal device, where the first control action corresponds to the terminal abnormality information; and deliver the first control action to the first network device via the communication module 1201.

In an implementation, the second network device is a data management function entity, and the processor 1202 is specifically configured to: receive, via the communication module 1201, a subscription data request message sent by the first network device, where the subscription data request message includes the terminal identifier, and the first network device is an access management function entity; and send, via the communication module 1201, subscription data corresponding to the terminal identifier to the first network device, where the subscription data includes the first control action.

In an implementation, the second network device is a policy control function entity, and the processor 1202 is specifically configured to: receive, via the communication module 1201, a policy request message that is sent by the first network device and that carries the terminal identifier, where the first network device is an access management function entity or a session management function entity.

In an implementation, the second network device is an element management function entity, and the first network device is a user plane function entity. The processor 1202 is specifically configured to: invoke, via the communication module 1201, a configuration command based on the first control action, where the configuration command includes a match condition and a corresponding control action, and the match condition includes at least one of the terminal identifier, the terminal abnormality status, and the terminal abnormality event; and send, via the communication module 1201, the configuration command to the first network device.

In an implementation, before receiving the request message of the first network device, the processor 1202 is further configured to: receive, via the communication module 1201, the terminal abnormality event of the terminal device reported by the first network device; determine, based on a preset correspondence between the terminal abnormality event and a control action, a second control action corresponding to the terminal abnormality event; and send the second control action to the first network device via the communication module 1201.

The memory 1203 is configured to store program instructions, data, and the like. Specifically, the program instructions may include program code. The program code includes computer operation instructions. The memory 1203 may include a random access memory (random access memory, RAM), or may further include a non-volatile memory (non-volatile memory), for example, at least one disk memory. The processor 1202 executes the program instructions stored in the memory 1203, and implements the foregoing functions by using the data stored in the memory 1203, to implement the method for controlling an abnormal terminal provided in the foregoing embodiment.

It may be understood that the memory 1203 in FIG. 12 of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that, the memory in the system and method described in this specification includes but is not limited to these memories and any other proper type of memory.

Based on the foregoing embodiments, an embodiment of this application further provides a communication system, including the apparatus 900 for controlling an abnormal terminal shown in FIG. 9 and the apparatus 1000 for controlling an abnormal terminal shown in FIG. 10.

Based on the foregoing embodiments, an embodiment of this application further provides a computer program. When the computer program is run on a computer, the computer is enabled to perform the method for controlling an abnormal terminal provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method for controlling an abnormal terminal provided in the foregoing embodiments.

The storage medium may be any available medium that can be accessed by the computer. For example, the computer-readable medium may be but is not limited to: a RAM, a ROM, an EEPROM, a CD-ROM, or another optical disc storage or disk storage medium, or another magnetic storage device, or any other medium that can carry or store expected program code having an instruction or in a form of a data structure and can be accessed by a computer.

Based on the foregoing embodiments, an embodiment of this application further provides a chip. The chip is configured to read a computer program stored in a memory, to implement the method for controlling an abnormal terminal provided in the foregoing embodiments.

Based on the foregoing embodiments, an embodiment of this application provides a chip system. The chip system includes a processor, configured to support a computer apparatus in implementing functions of a service device, a forwarding device, or a station device in the foregoing embodiments. In a possible design, the chip system further includes a memory. The memory is configured to store a program and data that are necessary for the computer apparatus. The chip system may include a chip, or may include a chip and another discrete component.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a processor of a general-purpose computer, a dedicated computer, an embedded processor, or another programmable data processing device to generate a machine, so that the instructions executed by the processor of the computer or another programmable data processing device generate an apparatus for implementing a specific function in one or more procedures in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A method for controlling an abnormal terminal, wherein the method comprises:

    receiving, by a first network device, data from a terminal device, wherein the data comprises user plane data and/or control plane data;
    determining, by the first network device, terminal abnormality information of the terminal device based on the data, wherein the terminal abnormality information comprises at least one of a terminal identifier, a terminal abnormality status, and a terminal abnormality event; and
    obtaining, by the first network device based on the terminal abnormality information, a first control action corresponding to the terminal device, and performing control and management on the terminal device based on the first control action.

2. The method according to claim 1, wherein the determining, by the first network device, terminal abnormality information of the terminal device based on the data comprises:

    obtaining, by the first network device, the terminal identifier of the terminal device based on the data; and/or
    performing, by the first network device, anomaly detection on the data, to determine the terminal abnormality event and/or the terminal abnormality status of the terminal device.

3. The method according to claim 1 or 2, wherein the terminal abnormality information comprises the terminal identifier, the first network device is an access management function entity, and the obtaining, by the first network device based on the terminal abnormality information, a first control action corresponding to the terminal device comprises:

    sending, by the first network device, a subscription data request message that carries the terminal identifier to a second network device, wherein the second network device is a data management function entity; and
    obtaining, by the first network device, subscription data of the terminal device from the second network device, wherein the subscription data comprises the first control action.

4. The method according to claim 1 or 2, wherein the terminal abnormality information comprises the terminal identifier, the first network device is an access management function entity or a session management function entity, and the obtaining, by the first network device based on the terminal abnormality information, a first control action corresponding to the terminal device comprises:

　　sending, by the first network device to the second network device, a policy request message that carries the terminal identifier, wherein the second network device is a policy control function entity; and
　　receiving, by the first network device, the first control action returned by the second network device.

5. The method according to claim 1 or 2, wherein the first network device is a user plane function entity, and the obtaining, by the first network device based on the terminal abnormality information, a first control action corresponding to the terminal device comprises:
searching, by the first network device based on the terminal abnormality information, the first network device for the first control action corresponding to the terminal device.

6. The method according to claim 5, wherein the searching, by the first network device based on the terminal abnormality information, the first network device for the first control action corresponding to the terminal device comprises:

　　receiving, by the first network device, a configuration command sent by a second network device, wherein the configuration command comprises a match condition and a corresponding control action, and the match condition comprises at least one of the terminal identifier, the terminal abnormality status, and the terminal abnormality event; and
　　determining, by the first network device based on a correspondence between the match condition and the control action, a control action corresponding to the terminal abnormality information as the first control action.

7. The method according to any one of claims 1 to 6, wherein before the obtaining, by the first network device based on the terminal abnormality information, a first control action corresponding to the terminal device, the method further comprises:

　　performing, by the first network device, anomaly detection on the data, to determine the terminal abnormality event of the terminal device; and
　　reporting, by the first network device, the terminal abnormality event of the terminal device to the second network device.

8. The method according to any one of claims 1 to 6, wherein before the obtaining, by the first network device based on the terminal abnormality information, a first control action corresponding to the terminal device, the method further comprises:

　　performing, by the first network device, anomaly detection on the data, to determine the terminal abnormality event of the terminal device;
　　reporting, by the first network device, the terminal abnormality event of the terminal device to the second network device;
　　receiving, by the first network device from the second network device, a second control action corresponding to the terminal abnormality event; and
　　performing control and management, by the first network device, on the terminal device based on the second control action.

9. The method according to any one of claims 2, 7, and 8, wherein the performing, by the first network device, anomaly detection on the data, to determine the terminal abnormality event of the terminal device comprises:

　　determining, by the first network device, the terminal abnormality event of the terminal device based on data sent by the terminal device within preset duration and a reference value, wherein the reference value is determined by using a trained statistical analysis model based on historical data of the terminal device;
　　determining, by the first network device by using a trained machine learning model, a terminal abnormality event corresponding to the data; or
　　determining, by the first network device, the terminal abnormality event of the terminal device based on a preset matching rule and the data.

10. The method according to any one of claims 1 to 9, wherein the performing control and management, by the first network device, on the terminal device based on the first control action comprises:
performing control and management, by the first network device, on the terminal device within the preset duration based on the first control action.

11. A method for controlling an abnormal terminal, wherein the method comprises:

　　receiving, by a second network device, a request message sent by a first network device, wherein the request message comprises terminal abnormality information of a terminal device, and the terminal abnormality information comprises at least one of a terminal identifier, a terminal abnormality status, and a terminal abnormality event; and

determining, by the second network device, a first control action corresponding to the terminal device, wherein the first control action corresponds to the terminal abnormality information, and delivering the first control action to the first network device.

12. The method according to claim 11, wherein the second network device is a data management function entity, and the receiving, by a second network device, a request message sent by a first network device comprises:

receiving, by the second network device, a subscription data request message sent by the first network device, wherein the subscription data request message comprises the terminal identifier, and the first network device is an access management function entity; and
the delivering the first control action to the first network device comprises:
sending, by the second network device, subscription data corresponding to the terminal identifier to the first network device, wherein the subscription data comprises the first control action.

13. The method according to claim 11, wherein the second network device is a policy control function entity, and the receiving, by a second network device, a request message sent by a first network device comprises:
receiving, by the second network device, a policy request message that is sent by the first network device and that carries the terminal identifier, wherein the first network device is an access management function entity or a session management function entity.

14. The method according to claim 11, wherein the second network device is an element management function entity, the first network device is a user plane function entity, and the delivering the first control action to the first network device comprises:

invoking, by the second network device, a configuration command based on the first control action, wherein the configuration command comprises a match condition and a corresponding control action, and the match condition comprises at least one of the terminal identifier, the terminal abnormality status, and the terminal abnormality event; and
sending, by the second network device, the configuration command to the first network device.

15. The method according to any one of claims 11 to 14, wherein before the receiving, by a second network device, a request message of a first network device, the method further comprises:

receiving, by the second network device, the terminal abnormality event of the terminal device reported by the first network device;
determining, by the second network device based on a preset correspondence between the terminal abnormality event and a control action, a second control action corresponding to the terminal abnormality event; and
sending, by the second network device, the second control action to the first network device.

16. An apparatus for controlling an abnormal terminal, used in a first network device, comprising:

a first communication unit, configured to receive data from a terminal device, wherein the data comprises user plane data and/or control plane data; and
a first processing unit, configured to: determine terminal abnormality information of the terminal device based on the data, wherein the terminal abnormality information comprises at least one of a terminal identifier, a terminal abnormality status, and a terminal abnormality event; and obtain, based on the terminal abnormality information, a first control action corresponding to the terminal device, and perform control and management on the terminal device based on the first control action.

17. The apparatus according to claim 16, wherein the first processing unit is specifically configured to:

obtain the terminal identifier of the terminal device based on the data; and/or
perform anomaly detection on the data, to determine the terminal abnormality event and/or the terminal abnormality status of the terminal device.

18. The apparatus according to claim 16 or 17, wherein the terminal abnormality information comprises the terminal identifier, the first network device is an access management function entity, and the first processing unit is specifically configured to:
send, via the first communication unit, a subscription data request message that carries the terminal identifier to a second network device, wherein the second network device is a data management function entity; and obtain subscription data of the terminal device from the second network device via the first communication unit, wherein the subscription data comprises the first control action.

**19.** The apparatus according to claim 16 or 17, wherein the terminal abnormality information comprises the terminal identifier, the first network device is an access management function entity or a session management function entity, and the first processing unit is specifically configured to:
send, via the first communication unit, a policy request message that carries the terminal identifier to the second network device, wherein the second network device is a policy control function entity; and receive, via the first communication unit, the first control action returned by the second network device.

**20.** The apparatus according to claim 16 or 17, wherein the first network device is a user plane function entity, and the first processing unit is specifically configured to:
search, based on the terminal abnormality information, the first network device for the first control action corresponding to the terminal device.

**21.** The apparatus according to claim 20, wherein the first processing unit is specifically configured to: receive, via the first communication unit, a configuration command sent by a second network device, wherein the configuration command comprises a match condition and a corresponding control action, and the match condition comprises at least one of the terminal identifier, the terminal abnormality status, and the terminal abnormality event; and determine, based on a correspondence between the match condition and the control action, a control action corresponding to the terminal abnormality information as the first control action.

**22.** The apparatus according to any one of claims 16 to 21, wherein the first processing unit is further configured to: before obtaining, based on the terminal abnormality information, the first control action corresponding to the terminal device, perform anomaly detection on the data, to determine the terminal abnormality event of the terminal device, and report the terminal abnormality event of the terminal device to the second network device via the first communication unit.

**23.** The apparatus according to any one of claims 16 to 21, wherein the first processing unit is further configured to: before obtaining, based on the terminal abnormality information, the first control action corresponding to the terminal device, perform anomaly detection on the data, to determine the terminal abnormality event of the terminal device, report the terminal abnormality event of the terminal device to the second network device via the first communication unit, and receive a second control action corresponding to the terminal abnormality event from the second network device via the first communication unit; and

perform control and management on the terminal device based on the second control action.

**24.** The apparatus according to any one of claims 17, 22, and 23, wherein the first processing unit is specifically configured to:

determine the terminal abnormality event of the terminal device based on data sent by the terminal device within preset duration and a reference value, wherein the reference value is determined by using a trained statistical analysis model based on historical data of the terminal device;
determine, by using a trained machine learning model, a terminal abnormality event corresponding to the data; or
determine the terminal abnormality event of the terminal device based on a preset matching rule and the data.

**25.** The apparatus according to any one of claims 16 to 24, wherein the first processing unit is specifically configured to:
perform control and management on the terminal device within the preset duration based on the first control action.

**26.** An apparatus for controlling an abnormal terminal, comprising:

a second communication unit, configured to: receive a request message sent by a first network device, wherein the request message comprises terminal abnormality information of a terminal device, and the terminal abnormality information comprises at least one of a terminal identifier, a terminal abnormality status, and a terminal abnormality event; and after a second processing unit determines a first control action, deliver the first control action to the first network device; and
the second processing unit, configured to determine the first control action corresponding to the terminal device, wherein the first control action corresponds to the terminal abnormality information.

**27.** The apparatus according to claim 26, wherein the second network device is a data management function entity, and the second communication unit is specifically configured to:

receive a subscription data request message sent by the first network device, wherein the subscription data request message comprises the terminal identifier, and the first network device is an access management function entity; and send subscription data corresponding to the terminal identifier to the first network device, wherein the subscription data comprises the first control action.

28. The apparatus according to claim 26, wherein the second network device is a policy control function entity, and the second communication unit is specifically configured to:
receive a policy request message that is sent by the first network device and that carries the terminal identifier, wherein the first network device is an access management function entity or a session management function entity.

29. The apparatus according to claim 26, wherein the second network device is an element management function entity, the first network device is a user plane function entity, and the second processing unit is specifically configured to:
invoke a configuration command based on the first control action, wherein the configuration command comprises a match condition and a corresponding control action, and the match condition comprises at least one of the terminal identifier, the terminal abnormality status, and the terminal abnormality event; and send, via the second communication unit, the configuration command to the first network device.

30. The apparatus according to any one of claims 26 to 29, wherein the second processing unit is further configured to: before receiving the request message of the first network device, receive, via the second communication unit, the terminal abnormality event of the terminal device reported by the first network device; determine, based on a preset correspondence between the terminal abnormality event and a control action, a second control action corresponding to the terminal abnormality event; and send the second control action to the first network device via the second communication unit.

31. A computer-readable storage medium, wherein the storage medium stores a computer program, and when the computer program is executed by a computer, the computer is enabled to perform the method according to any one of claims 1 to 10, or perform the method according to any one of claims 11 to 15.

```
      PCF              UDM              EMS
   Npcf            Nudm
─────────┬─────────────────┬──────────────────┬──────
         Namf              Nsmf
       ┌───────┐         ┌───────┐
       │  AMF  │         │  SMF  │
       └───────┘         └───────┘
     N1    │  N2            │   N4
  ┌─────┐ ┌─────┐  N3   ┌─────┐  N6  ┌─────┐
  │ UE  │ │ AN  │──────│ UPF │──────│ DN  │
  └─────┘ └─────┘       └─────┘       └─────┘
```

FIG. 1

Terminal | First network device | Second network device

S201: Data sent by the terminal

S202: Determine terminal abnormality information of the terminal based on the data sent by the terminal

S203: Obtain, based on the terminal abnormality information, a control policy corresponding to the terminal

**Manner 1**

S2031: Subscription data request message

S2032: Determine subscription data of the terminal based on a terminal identifier in the subscription data request message

S2033: Subscription data of the terminal, where the subscription data includes a first control action

S2034: Obtain the first control action from the subscription data of the terminal

**Manner 2**

S2035: Policy request message

S2036: Determine, based on a terminal identifier in the policy request message, a first control action corresponding to the terminal

S2037: First control action corresponding to the terminal

**Manner 3**

S2038: Search, based on the terminal abnormality information, the first network device for a first control action corresponding to the terminal

S204: Perform control and management on the terminal based on the first control action corresponding to the terminal

FIG. 2

| Terminal | CN | | | EMS |
|---|---|---|---|---|
| | UPF | AMF | UDM | |

S301: Access
the CN

S302: Receive data sent by
the terminal, and obtain a
terminal identifier

Pre-configure a
correspondence between an
abnormal event and a control
action

S303: Initiate a
network attack

S304: Perform anomaly
detection on the data sent by
the terminal, to determine a
terminal abnormality event
of the terminal

S305: Determine a single
control action based on the
terminal abnormality event
of the terminal

S306: Perform
single control and
management on
the terminal based
on the single
control action

S307: Terminal abnormality event

S308: Determine, based on the
preset correspondence between
the terminal abnormality event
and a control action, a first
control action corresponding to
the terminal abnormality event

| TO FIG. 3B | TO FIG. 3B | TO FIG. 3B | TO FIG. 3B | TO FIG. 3B |
|---|---|---|---|---|

FIG. 3A

28

CONT. FROM FIG. 3A  CONT. FROM FIG. 3A  CONT. FROM FIG. 3A  CONT. FROM FIG. 3A  CONT. FROM FIG. 3A

S309: Invoke a UDM configuration command to modify subscription data of the terminal, that is, modify a control action in the subscription data of the terminal to the first control action

S310: Request to access the CN again

S311: Obtain the terminal identifier

S312: Subscription data request message including the terminal identifier

S313: Determine the subscription data of the terminal based on the terminal identifier in the subscription data request message

S314: Subscription data of the terminal

S315: Perform control and management on the terminal based on the first control action in the subscription data of the terminal

FIG. 3B

| Terminal | CN<br>UPF | EMS |
|---|---|---|

S401: Access the CN →

Pre-configure a correspondence between an abnormal event and a control action

S402: Receive data sent by the terminal, and obtain a terminal identifier

S403: Initiate a network attack →

S404: Perform anomaly detection on the data sent by the terminal, to determine a terminal abnormality event of the terminal

S405: Determine a single control action based on the terminal abnormality event of the terminal

S406: Perform single control and management on the terminal based on the single control action ←

S407: Terminal abnormality event →

S408: Determine, based on the preset correspondence between the terminal abnormality event and a control action, a first control action corresponding to the terminal abnormality event

S409: Invoke a UPF configuration command to configure a correspondence between a match condition and the first control action to the UPF ←

S410: Request to access the CN again →

S411: Obtain terminal abnormality information

S412: Determine, based on the terminal abnormality information, the first control action corresponding to the terminal

S413: Perform control and management on the terminal based on the first control action corresponding to the terminal

FIG. 4

```
        ┌─────────────────────────────────────────────┐
        │                      CN                       │
┌──────────┐  ┌──────────┐  ┌──────────┐  ┌──────────┐       ┌──────────┐
│ Terminal │  │   UPF    │  │   AMF    │  │   SMF    │       │   PCF    │
└──────────┘  └──────────┘  └──────────┘  └──────────┘       └──────────┘
```

S501: Access
the CN

S502: Receive data sent by
the terminal, and obtain a
terminal identifier

Pre-configure a
correspondence between
an abnormal event and a
control action

S503: Initiate a
network attack

S504: Perform anomaly
detection on the data sent by
the terminal, to determine a
terminal abnormality event
of the terminal

S505: Determine a single
control action based on the
terminal abnormality event
of the terminal

S506: Perform
single control and
management on
the UE based on
the single control
action

S507: Terminal
abnormality event

S508: Terminal
abnormality
event

TO
FIG. 5B

TO
FIG. 5B

TO
FIG. 5B

TO
FIG. 5B

TO
FIG. 5B

FIG. 5A

31

CONT.
FROM
FIG. 5A

CONT.
FROM
FIG. 5A

CONT.
FROM
FIG. 5A

CONT.
FROM
FIG. 5A

CONT.
FROM
FIG. 5A

S509: Store the terminal
identifier and the terminal
abnormality event

S510: Request to access
the CN again

S511: Obtain the terminal
identifier

S512: Policy request message

S513: Search for, based on
the terminal identifier in the
policy request message, a
stored terminal identifier
and a stored terminal
abnormality event, and
determine, based on the
preset correspondence
between the terminal
abnormality event and a
control action, a first control
action corresponding to the
terminal abnormality event

S514: First control action
corresponding to the terminal

S515: Perform control and
management on the terminal
based on the first control action
corresponding to the terminal

FIG. 5B

CN

| Terminal | UPF | AMF | SMF | PCF |

S601: Access
the CN

Pre-configure a
correspondence between
an abnormal event and a
control action

S602: Receive data sent by
the terminal, and obtain a
terminal identifier

S603: Initiate a
network attack

S604: Perform anomaly
detection on the data sent by
the terminal, to determine a
terminal abnormality event
of the terminal

S605: Determine a single
control action based on the
terminal abnormality event
of the terminal

S606: Perform
single control and
management on
the terminal based
on the single
control action

S607: Terminal abnormality event

S608: Store the terminal
identifier and the terminal
abnormality event

S609: Request to access again

| TO | TO | TO | TO | TO |
| FIG. 6B | FIG. 6B | FIG. 6B | FIG. 6B | FIG. 6B |

FIG. 6A

CONT.
FROM
FIG. 6A

CONT.
FROM
FIG. 6A

CONT.
FROM
FIG. 6A

CONT.
FROM
FIG. 6A

CONT.
FROM
FIG. 6A

S610: Obtain the
terminal identifier

S611: Notify the
SMF that the
terminal requests to
access the CN

S612: Send a policy
request message

S613: Search for, based on
the terminal identifier in
the policy request
message, a stored terminal
identifier and a stored
terminal abnormality
event, and determine,
based on the preset
correspondence between
the terminal abnormality
event and the control
action, a first control
action corresponding to the
terminal abnormality event

S614: Control action
corresponding to the
terminal

S615: Perform control and
management on the terminal
based on the control action
corresponding to the terminal

FIG. 6B

FIG. 7A

CONT. FROM FIG. 7A    CONT. FROM FIG. 7A    CONT. FROM FIG. 7A    CONT. FROM FIG. 7A    CONT. FROM FIG. 7A

S709: Determine, based on the preset correspondence between the terminal abnormality event and a control action, a second control action corresponding to the terminal abnormality event

S710: Second control action corresponding to the terminal

S711: Second control action corresponding to the terminal

S712: Determine that the terminal currently accesses the CN, and perform control and management on the terminal based on the second control action corresponding to the terminal

FIG. 7B

| Terminal | CN | Security management function entity |
|---|---|---|

S801: The terminal accesses the CN according to a 3GPP standard procedure

S802: Receive data sent by the terminal, and obtain a terminal identifier

S803: Initiate a network attack

S804: Perform anomaly detection on the data sent by the terminal, to determine a terminal abnormality event of the terminal

S805: Terminal abnormality event

S806: Determine that a terminal abnormality status of the terminal is abnormal, and determine, based on a preset correspondence between the terminal abnormality event and a control action, a control action corresponding to the terminal abnormality event

S807: Store the determined control action in the security management function entity

TO
FIG. 8B

TO
FIG. 8B

TO
FIG. 8B

FIG. 8A

CONT.
FROM
FIG. 8A

CONT.
FROM
FIG. 8A

CONT.
FROM
FIG. 8A

S808: Control action
corresponding to the terminal

S809:
Determine whether the terminal
is connected

Yes

No

S810: Store the received control action in
the CN

S811: Request to access the
CN again

S812: Obtain the terminal identifier,
and determine, based on the terminal
identifier, the control action corresponding
to the terminal

S813: Perform control and management on
the terminal based on the control action
corresponding to the terminal

FIG. 8B

900

Apparatus for controlling an abnormal terminal

901

902

First communication
unit

First processing
unit

FIG. 9

1000

Apparatus for controlling an abnormal terminal

1001

1002

Second
communication unit

Second
processing unit

FIG. 10

1100

Function entity for controlling an abnormal terminal

1101

Communication
module

1102

Processor

1104

1103

Memory

FIG. 11

1200

Function entity for controlling an abnormal terminal

1201

Communication
module

1202

Processor

1204

1203

Memory

FIG. 12

<div align="center">

**INTERNATIONAL SEARCH REPORT**

</div>

| | International application No. |
|---|---|
| | **PCT/CN2021/121210** |

**A.   CLASSIFICATION OF SUBJECT MATTER**

H04W 12/08(2021.01)i;  H04W 12/12(2021.01)i;  H04L 29/06(2006.01)i

According to International Patent Classification (IPC) or to both national classification and IPC

**B.   FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; SIPOABS; DWPI; USTXT; WOTXT; EPTXT; CNKI; 3GPP: 异常, 非正常, 攻击, 用户面, 控制面, 信令, 数据, 报文, abnormal, attack, user plane, UP, control plane, CP, data, AMF, UDM, SMF, PCF, NWDF

**C.   DOCUMENTS CONSIDERED TO BE RELEVANT**

| Category* | Citation of document, with indication, where appropriate, of the relevant passages | Relevant to claim No. |
|---|---|---|
| X | CN 110602735 A (HUAWEI TECHNOLOGIES CO., LTD.) 20 December 2019 (2019-12-20) description paragraphs [0087]-[0409] | 1-31 |
| X | CN 110830422 A (CHINA MOBILE COMMUNICATION LTD., RESEARCH INSTITUTE et al.) 21 February 2020 (2020-02-21) description paragraphs [0257]-[0834] | 1-31 |
| X | CN 110535808 A (HUAWEI TECHNOLOGIES CO., LTD.) 03 December 2019 (2019-12-03) description paragraphs [0137]-[0341] | 1-31 |
| X | KPN. ""Abnormal Behaviour Analytics Suspicious Devices"" *SA WG2 Meeting #136 S2-1911807*, 08 November 2019 (2019-11-08), pp. 1-3 | 1-31 |
| X | CATT et al.,. ""Update to Abnormal Behaviour Related Network Data Analytics"" *3GPP TSG-SA WG2 Meeting #131 S2-1902083*, 19 February 2019 (2019-02-19), pp. 1-5 | 1-31 |
| A | US 2014157405 A1 (JOLL BILL et al.) 05 June 2014 (2014-06-05) entire document | 1-31 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 December 2021** | **15 December 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/121210**

| Patent document cited in search report | | | Publication date (day/month/year) | Patent family member(s) | | | Publication date (day/month/year) |
|---|---|---|---|---|---|---|---|
| CN | 110602735 | A | 20 December 2019 | WO | 2019238097 | A1 | 19 December 2019 |
| | | | | EP | 3800927 | A1 | 07 April 2021 |
| | | | | US | 2021099493 | A1 | 01 April 2021 |
| | | | | BR | 112020025388 | A2 | 09 March 2021 |
| | | | | CN | 110602735 | B | 29 June 2021 |
| | | | | IN | 202017055300 | A | 05 March 2021 |
| CN | 110830422 | A | 21 February 2020 | None | | | |
| CN | 110535808 | A | 03 December 2019 | US | 2020314140 | A1 | 01 October 2020 |
| | | | | WO | 2019223490 | A1 | 28 November 2019 |
| | | | | AU | 2019272212 | A1 | 14 May 2020 |
| | | | | AU | 2019272212 | B2 | 30 September 2021 |
| | | | | EP | 3687135 | A1 | 29 July 2020 |
| | | | | EP | 3687135 | A4 | 09 December 2020 |
| | | | | BR | 112020008191 | A2 | 08 December 2020 |
| | | | | CN | 110535808 | B | 30 March 2021 |
| | | | | VN | 71771 | A | 27 July 2020 |
| | | | | IN | 202037017583 | A | 30 October 2020 |
| US | 2014157405 | A1 | 05 June 2014 | None | | | |

Form PCT/ISA/210 (patent family annex) (January 2015)

**REFERENCES CITED IN THE DESCRIPTION**

**Patent documents cited in the description**

- CN 202011194022